# EUROPEAN PATENT APPLICATION

(11) **EP 4 443 568 A2**
(43) Date of publication of application: **09.10.2024**
(21) Application number: 24167977.8
(22) Date of filing: 01.04.2024
(51) Int. Cl.: H01M 8/04014, H01M 8/04007, H01M 8/04082, H01M 8/2475, H01M 8/2484, H01M 8/249, C25B 1/00

(54) **ELECTROCHEMICAL SYSTEM INCLUDING A VENTILATION ASSEMBLY AND METHOD OF VENTILATING THE SYSTEM**

(30) Priority: 04.04.2023 US 202363494051 P
(71) Applicant: Bloom Energy Corporation, San Jose, CA 95134 (US)
(72) Inventor: Juday, Samuel, San Jose CA 95134 (US); Kempton, Rueben M., San Jose CA 95134 (US); Pearson, Chad, San Jose CA 95134 (US); Tavi, Joseph, San Jose CA 95134 (US); Mahler, Jessica, San Jose CA 95134 (US)
(74) Representative: Wichmann, Hendrik

(57) **Abstract**

An electrochemical system includes a plurality of electrochemical modules, a ventilation assembly including a central duct connected to the plurality of electrochemical modules and configured to ventilate exhaust gas from the plurality of electrochemical modules, and a system component configured to transmit a fluid containing hydrogen gas, connected to the plurality of electrochemical modules and located inside the central duct.

## Description

### TECHNICAL FIELD

The present disclosure generally relates to an electrochemical system, and more particularly, to a ventilation assembly for a fuel cell or electrolyzer electrochemical system.

### BACKGROUND

An electrochemical system, such as fuel cell system or an electrolyzer system, may include electrochemical modules, such as fuel cell modules including one or more fuel cell stacks or electrolyzer modules including one or more electrolyzer stacks. One or more components of the electrochemical system may be located outside but fluidly or electrically connected to such electrochemical modules. The components may include balance of plant (BOP) components, such as pipes, pumps, valves, etc. The components could have potential leak points, such as hydrogen gas leak points.

### SUMMARY

According to an aspect of the present disclosure, an electrochemical system includes a plurality of electrochemical modules, a ventilation assembly including a central duct connected to the plurality of electrochemical modules and configured to ventilate exhaust gas from the plurality of electrochemical modules, and a system component configured to transmit a fluid containing hydrogen gas, connected to the plurality of electrochemical modules and located inside the central duct.

According to another aspect of the present disclosure, a method of ventilating an electrochemical system comprises exhausting a reaction exhaust gas and a cabinet exhaust gas comprising air from a plurality of electrochemical modules in the electrochemical system into a central duct containing system components which transmit a hydrogen containing fluid to or from the plurality of electrochemical modules; providing the cabinet exhaust gas in contact with the system components; and discharging the reaction exhaust gas and the cabinet exhaust gas out of the central duct.

According to another aspect of the present disclosure, an electrochemical system comprises a plurality of electrochemical modules; a ventilation assembly comprising at least one duct connected to the plurality of electrochemical modules and configured to ventilate exhaust gas from the plurality of electrochemical modules; and a system component configured to transmit a fluid comprising hydrogen gas, connected to the plurality of electrochemical modules and located in a same volume as the ventilation assembly.

### BRIEF DESCRIPTION OF THE DRAWINGS

The accompanying drawings, which are incorporated herein and constitute part of this specification, illustrate examples of the disclosed devices and methods, and together with the general description given above and the detailed description given below, serve to explain the features of the invention.
FIG. 1 is a vertical cross-sectional view of a fuel cell module (e.g., power module) according to one or more embodiments.
FIG. 2A is a plan view (top-down view) of a fuel cell system according to one or more embodiments.
FIG. 2B is a vertical cross-sectional view of a first system component according to one or more embodiments.
FIG. 3A is a vertical cross-sectional view of a fuel cell system having a first alternative configuration according to one or more embodiments.
FIG. 3B is a perspective cut-away view of the lower portion of the system of FIG. 3A according to one or more embodiments.
FIG. 4 is a vertical cross-sectional view of the fuel cell system having a second alternative configuration according to one or more embodiments.
FIG. 5 is a plan view (top-down view) of a fuel cell system having a third alternative configuration according to one or more embodiments.
FIG. 6 is a flowchart illustrating a method of ventilating an electrochemical system according to one or more embodiments.
FIGS. 7A, 7B and 7C are perspective cut-away views of an electrolyzer module according one or more embodiments.
FIGS. 8A, 8B, 8C and 8D are top views and FIG. 8E is a side view of an electrolyzer system according one or more embodiments.
FIG. 9A is a top view and FIG. 9B is a side view of an electrolyzer system according one or more embodiments.
FIGS. 10A, 10B, 10C and 10D are top views and FIGS. 10E and 10F are side views of an electrolyzer system according one or more embodiments.
FIGS. 11A, 11B and 11C are top views an electrolyzer system according one or more embodiments.

### DETAILED DESCRIPTION

Various examples will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims. It is also understood that the examples shown in the figures are not mutually exclusive. Features shown in one example (e.g., in one figure) may be included in other examples (e.g., in other figures).

At least one embodiment of the present disclosure may help increase the safety of an electrochemical system which utilizes hydrogen gas (e.g., fuel cell system that operates on a hydrogen fuel, an electrolyzer system which generates hydrogen product from water, etc.) without additional components. Specifically, hydrogen handling balance of plant ("BOP") components, such as pipes, pumps, valves, etc., which handle hydrogen gas, may be placed in an air exhaust conduit of the electrochemical system. In case of a hydrogen leak from the hydrogen handling BOP components, the leaking hydrogen is diluted by the air exhaust stream of the electrochemical system that is already flowing through the air exhaust conduit. Thus, an additional air stream for hydrogen dilution does not have to be generated, and additional air handling equipment for hydrogen leaks is not required. This configuration reduces the cost and complexity of the system.

In one embodiment, air flow switches and/or pressure sensors may be used to confirm that the air exhaust flow is continuously present in the air exhaust conduit to dilute any leaking hydrogen gas. In one embodiment, gas detection sensors (e.g., hydrogen sensors) may also be included in the electrochemical modules themselves or in the external BOP components (e.g., in the air exhaust conduit) to detect hydrogen leaks. In one embodiment, the system may include one or more blowers and/or fans which generate sufficient air flow in the air exhaust conduit to dilute any leaking hydrogen in addition to or instead of natural air convection.

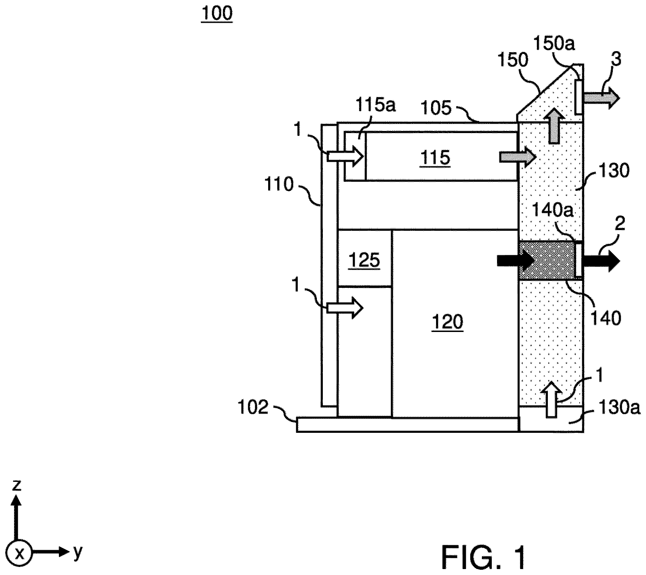

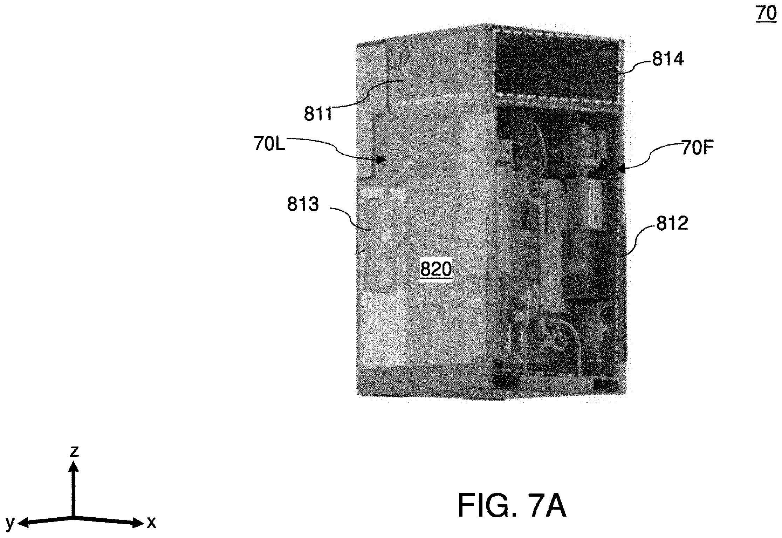

FIG. 1 is a vertical cross-sectional view of an electrochemical module according to an embodiment of the present disclosure. In one embodiment, the electrochemical module is a fuel cell module 100 (e.g., fuel cell power module) which includes a stack of fuel cells, such as solid oxide fuel cells (SOFCs) which generate power from fuel and air streams provided to the fuel cells. However, it should be noted that in other embodiments described below with regard to FIGS. 7A to 11C, the electrochemical module may be an electrolyzer module which includes a stack of electrolyzer cells, such as solid oxide electrolyzer cells (SOECs), which electrolyze water into hydrogen and oxygen streams using electrical power applied to the cells.

As illustrated in FIG. 1, the fuel cell module 100 may include a base 102 and a fuel cell module cabinet 105 mounted on the base 102. The fuel cell module cabinet 105 may have a substantially hollow rectangular cuboid shape. However, other shapes may also be used. The base 102 may be constructed of metal and/or concrete. The fuel cell module cabinet 105 may be constructed, for example, of sheet metal, plastic or a combination thereof. The fuel cell module cabinet 105 may serve as a housing for various components of the fuel cell module 100.

The fuel cell module cabinet 105 may include an opening covered by a door 110 on a front side of the fuel cell module cabinet 105. The door 110 may be connected to the fuel cell module cabinet 105 by a hinge or the like and may be opened to access an inside of the fuel cell module cabinet 105. One or more air inlets (not shown) may also be located on a front side of the fuel cell module 100. In at least one embodiment, the air inlets may be located in the door 110 along with one or more filters, traps, etc. for purifying the air before it enters the inside of the fuel cell module cabinet 105.

The fuel cell module 100 may include one or more electronics modules 115 housed in the fuel cell module cabinet 105. The electronics modules 115 may each include one or more fans 115a for cooling the electronics modules 115. Ambient air 1 may be directed into the electronics module 115 through the air inlets on the front side of the fuel cell module cabinet 105 by the fans 115a in the electronics modules 115. The electronics modules 115 may also include power conditioning electronics for the fuel cell stack, such as DC/DC converters, etc.

The fuel cell module 100 may also include one or more power generation components located in the fuel cell module cabinet 105. In particular, the fuel cell module 100 may include a hot box 120 including one or more fuel cell stacks, heat exchangers, anode tail gas oxidizer, and one or more fluid conduits, such as pipes and/or manifolds through which various process streams (e.g., fuel, air, fuel exhaust, air exhaust, water, etc.) flow. The fuel cell module 100 may also include a BOP sub-system 125 that may include blowers, valves, conduits, etc., located outside the hot box 120. For example, the BOP sub-system 125 may include an air inlet blower, which provides an air inlet stream into the hot box, and a fuel recycle blower, which recycles at least part of the fuel cell stack fuel exhaust into a fuel inlet stream.

In at least one embodiment, the fuel cell stacks in the hot box 120 may be arranged in one or more columns of fuel cell stacks (not shown), such as, for example, one or more columns of solid oxide fuel cells (SOFCs) having a ceramic oxide electrolyte separated by conductive interconnect plates. Other fuel cell types, such as Proton Exchange Membrane (PEM), molten carbonate, phosphoric acid, etc., may also be included in the hot box 120 instead of or in addition to SOFCs. The fuel cell stacks may include externally and/or internally manifolded stacks. For example, the fuel cell stacks may be externally manifolded for air and internally manifolded for fuel with fuel risers extending through openings in the fuel cell layers and/or in the interconnect plates between the fuel cells. The fuel may include, for example, hydrogen fuel. Other suitable fuels may also be used, such as natural gas, biogas, etc.

The fuel cell module 100 may also include a ventilation module 130 connected to a backside of the fuel cell module cabinet 105. The ventilation module 130 may comprise a hollow space enclosed by one or more walls (e.g., an air exhaust conduit, such as an air exhaust manifold). A reaction exhaust gas conduit 140 may be connected to the hot box 120 and extend out the backside of the fuel cell module cabinet 105. In at least one embodiment, the reaction exhaust gas conduit 140 may extend through the ventilation module 130 without being in fluid communication with the ventilation module 130. In other words, the gas in conduit 140 is not mixed with the gas (e.g., warmed ambient air) in module 130. Reaction exhaust gas 2 (e.g., oxidized fuel exhaust which is exhausted from an anode tail gas oxidizer) provided from the hot box 120 may be exhausted out of the fuel cell module 100 through a reaction exhaust gas outlet 140a in the reaction exhaust gas conduit 140.

A cabinet exhaust gas conduit 150 may be located at an upper end of the ventilation module 130. Cabinet exhaust gas 3 from inside the fuel cell module cabinet 105, including from inside the electronics module 115, may also be drawn into the ventilation module 130 and exhausted through a cabinet exhaust gas outlet 150a in the cabinet exhaust gas conduit 150. The ventilation module 130 may optionally include one or more air vents 130a. Ambient air 1 may be directed through the air vents 130a into the ventilation module 130 by one or more blowers or fans located in the ventilation module 130. Thus, the cabinet exhaust gas 3 includes ambient air 1 warmed by flowing over the warm electronics module 115 and optionally fresh ambient air 1 provided into the ventilation module 130 through the air vents 130a.

It should be noted that the exhaust structures and methods of exhausting reaction exhaust gas 2 and cabinet exhaust gas 3 from the fuel cell module 100 described above are only provided as examples. Other exhaust structures and methods of exhausting reaction exhaust gas 2 and cabinet exhaust gas 3 from the fuel cell module 100 may also be used.

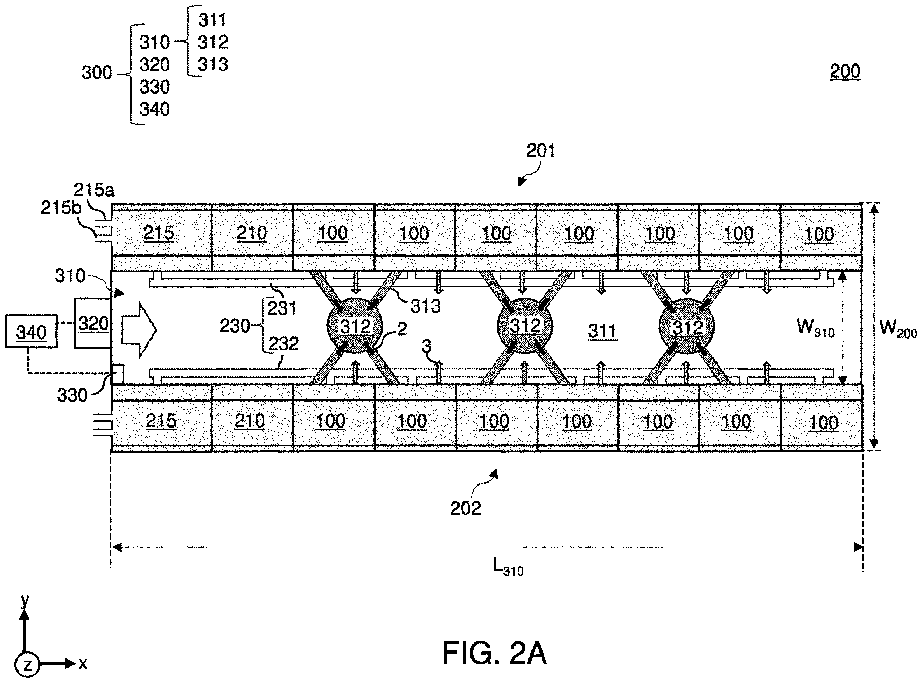

FIG. 2A is a plan view (top-down view) of an electrochemical system according to one or more embodiments. In one embodiment, the electrochemical system may comprise a fuel cell system 200. Alternatively, the electrochemical may comprise an electrolyzer system. In one embodiment, the fuel cell system 200 may be located in an enclosed space, such as a room of a building or inside of a marine vessel (e.g., a ship). Alternatively, the fuel cell system 200 may be located in a non-enclosed space, such as outside of a building. As illustrated in FIG. 2A, the fuel cell system 200 may include a first module unit 201. The first module unit 201 may include a plurality of the fuel cell modules 100, a power conditioning module 210 (e.g., electrical output module containing one or more DC/AC inverters) and a fuel processing module 215. In at least one embodiment, the plurality of fuel cell modules 100, power conditioning module 210 and fuel processing module 215 may be substantially aligned in a first direction (e.g., x-direction). In this case, the first module unit 201 comprises a first row of modules (e.g., cabinets).

The fuel cell modules 100 may be electrically connected with the power conditioning module 210 through wires and/or cables, and fluidly connected to each other and to the fuel processing module 215 through one or more fluid conduits provided within the fuel cell system 200. For example, the fuel cell modules 100 may be connected with each other and with the power conditioning module 210 and the fuel processing module 215 through wires, cables and conduits provided in the base 102 beneath the respective module cabinets (e.g., 105, etc.). The fuel cell module 100 may be fluidly connected with the fuel processing module 215 through fluid conduits (e.g., pipes) in the base 102, and may receive fuel, such as de-sulfurized and/or purified fuel (e.g., hydrogen, natural gas, etc.), from the fuel processing module 215.

The power conditioning module 210 may include a cabinet that contains components (e.g., DC/AC inverter) for converting DC power generated by fuel cell stacks located in the fuel cell modules 100 to AC power, electrical connectors for AC power output to a power grid, circuits for managing electrical transients, and a system controller (e.g., a computer or dedicated control logic device or circuit).

The fuel processing module 215 may include a cabinet which contains components used for pre-processing a fuel, such as, for example, adsorption beds (e.g., de-sulfurizer and/or other impurity adsorption beds). The fuel processing module 215 may also be used for post-processing the fuel, in which recycled hydrogen (e.g., either recycled hydrogen fuel or a hydrogen containing fuel exhaust stream) from the fuel cell modules 100 is provided to the fuel processing module 215 for purification, storage, recycling into the fuel inlet stream and/or use outside the system 200. The fuel processing module 215 may be connected to a process cooling water input line 215a delivering cooling water for use in a fuel processing operation of the fuel processing module 215. The fuel processing module 215 may also be connected to a process cooling water discharge line 215b delivering used cooling water out of the fuel processing module 215. The fuel processing module 215 may process at least one of the following fuels: natural gas provided from a pipeline, compressed natural gas, methane, propane, liquid petroleum gas, gasoline, diesel, home heating oil, kerosene, JP-5, JP-8, aviation fuel, hydrogen, ammonia, ethanol, methanol, syn-gas, bio-gas, bio-diesel and other suitable hydrocarbon or hydrogen containing fuels. In some examples, a reformer (not shown) may be included in the fuel processing module 215. In some examples, the reformer may be thermally integrated with the fuel cell stack(s). In such examples, a separate reformer may be disposed in each hot box 120 in a respective fuel cell module 100. In some examples, if internally reforming fuel cells are used, an external reformer may be omitted. The fuel processing module 215 may be fluidly connected with the one or more fuel cell modules 100 (e.g., via conduits provided in the base 102) to provide processed fuel (e.g., de-sulfurized and/or purified fuel) to the fuel cell modules 100 in the first module unit 201.

As illustrated in FIG. 2A, the first module unit 201 may include any number of fuel cell modules 100, such as 2 to 10 fuel cell modules 100. For example, as illustrated in FIG. 2A, the first module unit 201 may include six fuel cell modules 100 (arranged side by side in a row), one fuel processing module 215, and one power conditioning module 210. The fuel cell modules 100, the fuel processing module 215, and the power conditioning module 210 may be disposed on a common base 102. The base 102 may also provide a common space for wiring cables, power lines, conduits that may connect the fuel cell modules 100 with the fuel processing module 215 and/or the power conditioning module 210. Each of the fuel cell modules 100, fuel processing module 215, and power conditioning module 210 may include its own module cabinet 105. Alternatively or additionally, the fuel processing module 215 and the power conditioning module 210 may be combined into a single input/output (I/O) module disposed in one module cabinet 105.

The fuel cell system 200 may also include a second module unit 202 including a plurality of fuel cell modules 100, another power conditioning module 210 and another fuel processing module 215. An arrangement of the plurality of the fuel cell modules 100, power conditioning module 210 and fuel processing module 215 in the second module unit 202 may be substantially the same as in the first module unit 201. In at least one embodiment, the plurality of fuel cell modules 100, power conditioning module 210 and fuel processing module 215 in the second module unit 202 may mirror the plurality of fuel cell modules 100, power conditioning module 210 and fuel processing module 215 in the first module unit 201.

The fuel cell system 200 may also include a ventilation assembly 300 including a central duct 310. The first module unit 201 may be connected to the central duct 310 on a first side of the central duct 310. The second module unit 202 may be connected to a second side of the central duct 310 opposite the first side of the central duct 310. A width W₃₁₀ of the central duct 310 in the y-direction may be in a range from 1 meter to 4 meters. An overall width W₂₀₀ of the fuel cell system 200 (e.g., a combined width of the central duct 310, the first module unit 201 and the second module unit 202) may be in a range from 3 meters to 7 meters. A length L₃₁₀ of the central duct 310 in the x-direction may be substantially the same as a length of the first module unit 201 and a length of the second module unit 202. In at least one embodiment, the length L₃₁₀ may be in a range from about 10 meters to 15 meters, depending on the number of fuel cell modules 100 included in the fuel cell system 200. For example, where each of the first module unit 201 and the second module unit 202 include seven (7) fuel cell modules, the length L₃₁₀ may be in a range from 10 meters to 12 meters. Other dimensions for the system 200 may also be used.

The central duct 310 may include one or more outer duct portions 311 and one or more inner duct portions 312 located inside the outer duct portions 311. The outer duct portions 311 and inner duct portions 312 may be formed, for example, of sheet metal such as galvanized steel. The outer duct portion 311 may be used to exhaust the cabinet exhaust gas 3 from the fuel cell modules 100. The outer duct portion 311 may be connected to the cabinet exhaust gas outlet 150a of the cabinet exhaust gas conduit 150 on each of the fuel cell modules 100 in the first module unit 201 and the second module unit 202.

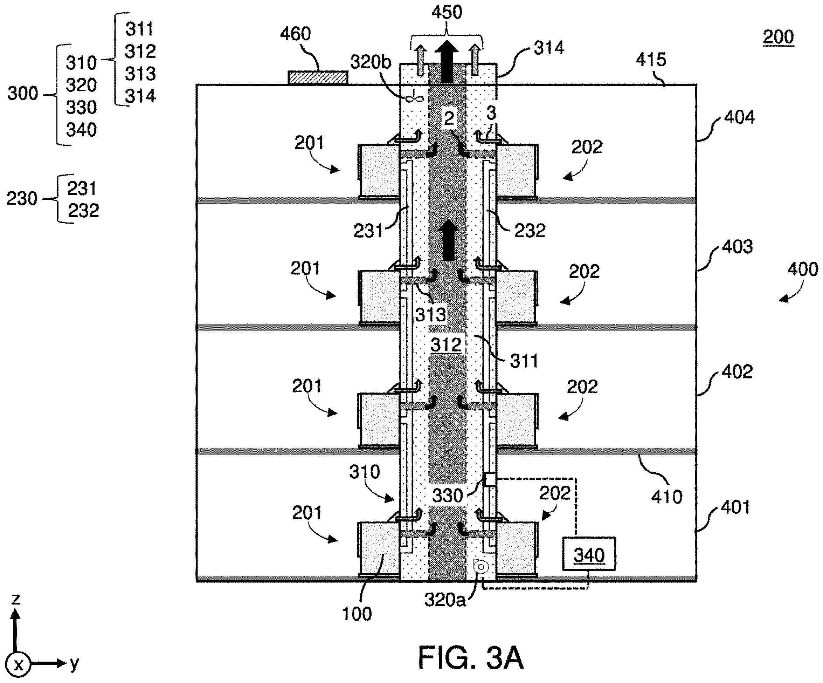

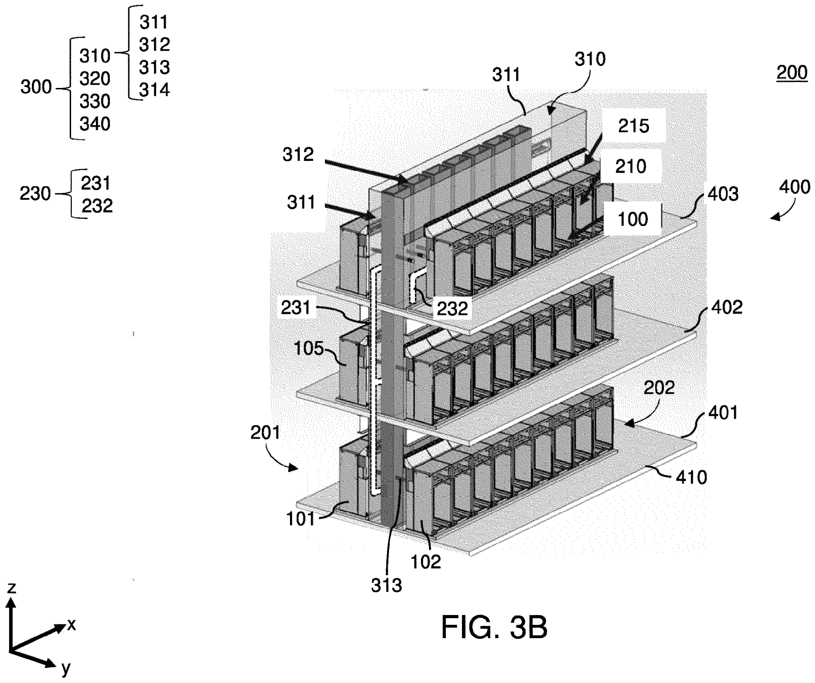

The outer duct portion 311 may extend in the x-direction along an entire length of the first module unit 201 and an entire length of the second module unit 202. The outer duct portion 311 and inner duct portion 312 may also extend in the z-direction (e.g., vertically). In at least one embodiment, the fuel cell system 200 may be located on multiple vertical levels, as described below, with respect to FIGS. 3 to 6. In that case, each level of the multiple levels may include a first module unit 201 and a second module unit 202 connected to the central duct 310 of the ventilation assembly 300, as illustrated in FIG. 2A.

The inner duct portion 312 may be used to exhaust the reaction exhaust gas 2 from the fuel cell modules 100. The inner duct portion 312 may extend in the z-direction (e.g., vertically into and out of the page) in FIG. 2A. The inner duct portion 312 may be connected by one or more connector ducts 313 to each of the fuel cell modules 100. The connector ducts 313 may also be formed of sheet metal, such as galvanized steel. The connector ducts 313 may be connected to the reaction exhaust gas outlet 140a of the reaction exhaust gas conduit 140 on each of the fuel cell modules 100 in the first module unit 201 and the second module unit 202. A temperature of the reaction exhaust gas 2 in the inner duct portion 312 may be significantly greater than a temperature of the cabinet exhaust gas 3 in the outer duct portion 311.

The inner duct portion 312 may be centrally located in the y-direction in the outer duct portion 311. As illustrated in FIG. 2A, the inner duct portion 312 may be connected by the connector ducts 313 to one or more fuel cell modules 100 in the first module unit 201 and one or more fuel cell modules 100 in the second module unit 202. The inner duct portion 312 may have a circular cross-sectional shape as illustrated in FIG. 2A. However, other suitable cross-sectional shapes may be used.

The ventilation assembly 300 may also include one or more blowers or fans 320 connected to the central duct 310. In particular, the one or more blowers or fans 320 may be connected to the outer duct portion 311 and force the cabinet exhaust gas 3 through (e.g., into and/or out of) the outer duct portion 311.

In one embodiment, the one or more blowers or fans 320 may comprise at least one blower located at an inlet of the outer duct portion 311. The at least one blower may force fresh air (e.g., outdoor ambient air 1) from outside of any enclosed area into the outer duct portion 311 so that the cabinet exhaust gas 3 in the outer duct portion 311 contains a mixture of fresh ambient air and the warmed air exhausted from the cabinets 105. A level of hydrogen or hydrocarbon gas in the outer duct portion 311 may be negligible (e.g., less 1% by volume) since it is diluted by the cabinet exhaust gas 3 and outdoor ambient air 1. In another embodiment, the one or more blowers or fans 320 may comprise at least one fan located at an outlet of the outer duct portion 311. The at least one fan may draw the cabinet exhaust gas 3 out from the outer duct portion 311 into the outlet. In yet another embodiment, the one or more blowers or fans 320 may comprise at least one fan and at least one blower.

The ventilation assembly 300 may also include one or more sensors 330 located inside the central duct 310. The sensors 330 may include one or more of a temperature sensor, humidity sensor, gas concentration sensor, etc. In particular, the sensors 330 may be located inside the outer duct portion 311 and detect a condition (e.g., temperature, humidity, hydrogen gas concentration, etc.) in the outer duct portion 311. The ventilation assembly 300 may also include a ventilation assembly controller 340 configured to control an operation of the ventilation assembly 300. In at least one embodiment, the ventilation assembly controller 340 may control an operation of the at least one blower or fan 320 based on one or more sensor signals from the sensors 330. It should be noted that the ventilation assembly controller 340 may be communicatively coupled to the sensors 330 and blowers/fans 320 by a wired and/or wireless connection.

The ventilation assembly controller 340 may include, for example, a microcontroller. In particular, the ventilation assembly controller 340 may include one or more processors (e.g., central processing units (CPUs)). The ventilation assembly controller 340 may also include one or more memory devices and programmable input/output peripherals. In at least one embodiment, the ventilation assembly controller 340 may include a wireless (e.g., Wi-Fi) interface for wireless communication.

The memory device in the ventilation assembly controller 340 may include, for example, read only memory (ROM) and/or random access memory (RAM). The memory device may store instructions to be executed by the processor, data (e.g., look up tables) to be used by the processors in executing instructions, and other data (e.g., history data) that may include data generated by the processors. The processors may also be connected to an operator control signal line (not shown) by which the processors may receive an operator control signal to adjust an operating condition (e.g., cabinet exhaust gas 3 flow rate in the outer duct portion 311) in the ventilation assembly controller 340. For example, if a hydrogen leak into the outer duct portion 311 is detected, then the controller 340 either activates or increases the speed of the at least one blower or fan 320 to increase the cabinet exhaust gas 3 flow rate in the outer duct portion 311 to increase the dilution of the hydrogen gas by the cabinet exhaust gas 3.

The fuel cell system 200 may also include one or more system components 230 located inside the central duct 310. In at least one embodiment, the system components 230 may be hydrogen handling components that are located in the outer duct portion 311 of the central duct 310. In at least one embodiment, the system components 230 may be connected to one or more of the fuel cell modules 100 in the first module unit 201 and/or the second module unit 202. In particular, the system components 230 may be connected to one or more hot boxes 120 of the fuel cell modules 100 in the first module unit 201 and/or the second module unit 202. The system components 230 may include, for example, a hydrogen fuel line (e.g., pipe) and/or a hydrogen recycle line (e.g., pipe) for transporting hydrogen between the hot boxes 120 in the fuel cell modules 100 and the fuel processing module 215, and associated valves. For example, the hydrogen fuel line may provide purified hydrogen fuel from the fuel processing module 215 to the fuel cell modules 100. The hydrogen recycle line may provide recycled hydrogen (e.g., either recycled hydrogen fuel or a hydrogen containing fuel exhaust stream) from the fuel cell modules 100 to the fuel processing module 215 for purification, storage, recycling into the fuel inlet stream and/or use outside the system 200. Further, although it is not illustrated in FIG. 2A, the system components 230 may extend across the outer duct portion 311 and connect one or more fuel cell modules 100 in the first module unit 201 to one or more fuel cell modules 100 in the second module unit 202.

The system components 230 may include a first system component (e.g., hydrogen line) 231 connected to one or more of the fuel cell modules 100 and fuel processing module 215 in the first module unit 201. The first system component 231 may be formed between the inner duct portion 312 and the first module unit 201. In at least one embodiment, one or more of the connector ducts 313 may extend from the reaction exhaust gas outlet 140a of one or more fuel cell modules 100 in the first module unit 201, past the first system component 231 to the inner duct portion 312 of the central duct 310.

The system components 230 may also include a second system component 232 connected to one or more of the fuel cell modules 100 and the fuel processing module 215 in the second module unit 202. In at least one embodiment, one or more of the connector ducts 313 may extend from the reaction exhaust gas outlet 140a of one or more fuel cell modules 100 in the second module unit 202, past the second system component 232 to the inner duct portion 312 of the central duct 310. In particular, the system components 230 may include, piping, hoses, tubing, filters (e.g., air filters, exhaust gas filters), heat exchangers, seals, gaskets, valves (e.g., control valves, shutoff valves and/or safety release valves), flow meters, blowers, sensors (e.g., temperature sensors, pressure sensors, humidity sensors, and/or gas concentration sensors), nozzles, baffles, marine equipment, water drains, condensers, power equipment, carbon capture equipment, etc.

In at least one embodiment, the system components 230 may include a pipe configured to transport a fluid (e.g., gas or liquid) and the sensors 330 may include a fluid sensor configured to detect a presence of the fluid in the outer duct portion 311. The pipe may include at least one of a water line, a fuel (e.g., hydrogen fuel) line, hydrogen recycle line or a carbon capture line. The carbon capture system exhaust may include some hydrogen. Thus, the carbon capture line may comprise an exhaust line from the carbon capture system. The system component may also include another component (e.g., valve, pump, etc.) connected to the pipe and configured to at least one of monitor or regulate a flow of the fluid (e.g., hydrogen gas or another fluid that may contain hydrogen gas) in the pipe. Thus, any leak of the fluid (e.g., hydrogen) from the pipe will be quickly diluted by the cabinet exhaust gas 3 and carried away from the area of the leak to the outlet of the central duct 311. Therefore, a fluid leak from the pipe may not result in the formation of an area in the central duct 311 with a high concentration of the fluid.

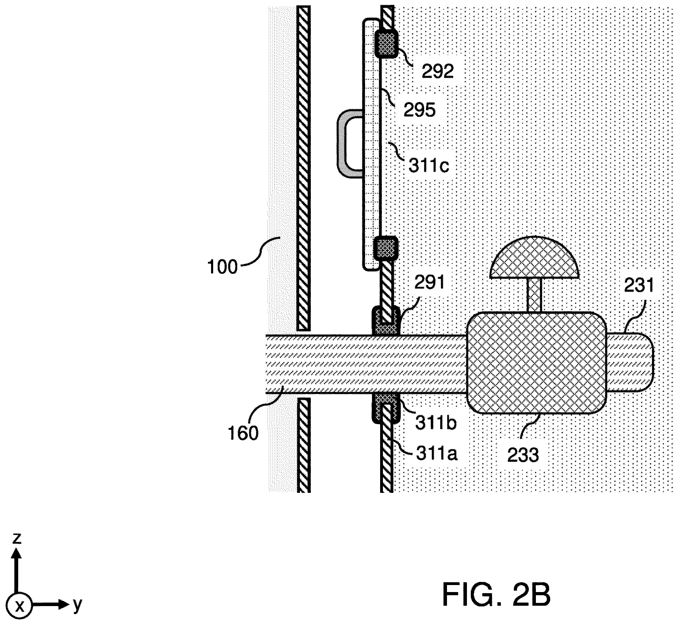

FIG. 2B is a vertical cross-sectional view of the first system component 231 according to one or more embodiments. It should be noted that the second system component 232 may have a configuration similar to that of the first system component 231 in FIG. 2B.

As illustrated in FIG. 2B, the first system component 231 may be connected to a connector pipe 160 that is connected to the fuel cell module 100. The connector pipe 160 may alternatively be connected to the fuel processing module 215. The connector pipe 160 may extend out of the fuel cell module 100 and through an opening 311b in an outer duct portion wall 311a of the outer duct portion 311 of the central duct 310. A seal member 291 may be formed in the opening 311b and form a substantially air-tight seal around the connector pipe 160 in the opening 311b. The seal member 291 may substantially inhibit or prevent the cabinet exhaust gas 3 from escaping the outer duct portion 311 through the opening 311b. The seal member 291 may be formed, for example, of plastic, rubber, silicone, etc.

The first system component 231 may include, for example, a pipe similar to the connector pipe 160. For example, the connector pipe 160 may comprise a terminal portion of a hydrogen pipe which is connected to each hot box 120, while the system component 231 may comprise the remainder of the hydrogen pipe. The first system component 231 may be connected to an end of the connector pipe 160 inside the outer duct portion 311. The first system component 231 may be connected to the end of the connector pipe 160 by a valve 233 (e.g., flow control or shutoff valve). Since the valve 233 is located in the outer duct portion 311 of the central duct 310, any fluid (e.g., hydrogen gas) leaking from the valve 233 or the first system component 231 is diluted by the cabinet exhaust gas 3.

As further illustrated in FIG. 2B, the outer duct portion wall 311a may also include service opening 311c near the opening 311b in the outer duct portion wall 311a. The service opening 311c may be sealed with a seal member 292 (e.g., air-tight seal member) similar to the seal member 291. The service opening 311c may also be sealed with a service door 295 (e.g., air-tight door) attached (e.g., by hinges, etc.) to the outer duct portion wall 311a. The service door 295 may be opened by a user to allow the user to access components located inside of the outer duct portion 311 through the service opening 311c. This may allow the user to perform maintenance on the system component 231 or other devices and equipment (e.g., sensors, blowers, etc.) in the central duct 310. Therefore, the cost and complexity of the fuel cell system 200 may be significantly reduced compared to a fuel cell system in which the system components may be located outside of the central duct 310.

FIG. 3A is a vertical cross-sectional view of a fuel cell system 200 having a first alternative configuration and FIG. 3B is a perspective cut-away view of the lower portion of the system 200 of FIG. 3A according to one or more embodiments. The module units 201 and 202 of the fuel cell system 200 in the first alternative configuration may be located on different vertical levels. In the first alternative configuration, the fuel cell system 200 may be configured such that pairs of module units 201 and 202 are located on different floors of building 400 and are fluidly connected to a common central duct 310. The building 400 may include a plurality of floors, including a first floor 401, a second floor 402, a third floor 403 and a fourth floor 404. It should be noted that the first floor 401 is the lowest floor containing at least one module unit of the electrochemical system and is not necessarily the ground or lowermost floor of the building 400. The first floor 401, second floor 402, third floor 403 and fourth floor 404 may include a substantially enclosed space including a floor 410, walls and a ceiling. In at least one embodiment, the first floor 401, second floor 402, third floor 403 and fourth floor 404 may include a substantially non-enclosed (e.g., open) space that may not have walls or may be only partially walled.

The fuel cell system 200 in the first alternative configuration may include a first module unit 201 and a second module unit 202 on multiple floors. Thus, for example, a first module unit 201 and second module unit 202 may be located on each of the first floor 401, second floor 402, third floor 403 and fourth floor 404 of the building 400. The fuel cell modules 100, power conditioning module 210 and fuel processing module 215 in each of the first module unit 201 and the second module unit 202 may be substantially aligned in the x-direction (e.g., into and out of the page) in FIG. 3A.

For each of the first floor 401, second floor 402, third floor 403 and fourth floor 404, the ventilation assembly 300 may have a horizontal cross-section (e.g., in the x-y plane) that is substantially similar to the view illustrated in FIG. 2A. Alternatively, the first alternative configuration may have a horizontal cross-section that is different to the view in FIG. 2A. Further, as illustrated in FIG. 3A, the central duct 310 of the ventilation assembly 300 may extend vertically (e.g., in the z direction) between the first module unit 201 and second module unit 202 on each of the first floor 401, second floor 402, third floor 403 and fourth floor 404. The ventilation assembly 300 may also include a chimney 314 including a part (e.g., terminal part) of the central duct 310 that extends above a roof 415 of the building 400.

As further illustrated in FIG. 3A, at least one blower 320a of the ventilation assembly 300 may be located at a bottom end of the central duct 310. The blower 320a may force air into the bottom end of the central duct 310 and upward vertically into the outer duct portion 311. The forced air from the blower 320a may force the cabinet exhaust gas 3 to move vertically upward and out of the chimney 314 of the central duct 310 as part of the fuel cell system exhaust stream 450. Furthermore at least one fan 320b may be located at an upper end of the outer duct portion 311 to draw the cabinet exhaust gas 3 out of the outer duct portion 311 through the chimney 314. The reaction exhaust gas 2 (e.g., hot reaction gases) and cabinet exhaust gas 3 may also be moved along vertically due to convection in the central duct 310. Thus, the electrochemical system exhaust stream 450 may include the reaction exhaust gas 2 and the cabinet exhaust gas 3 (which includes warmed air exhausted from the cabinet units 201, 202 and optionally fresh ambient air that is forced into the outer duct portion 311 by the blower 320a and/or drawn into the outer duct portion 311 by the fan 320b).

A filtering device (not shown) may be located in or near the chimney 314 of the central duct 310. The filtering device may filter particles, gases, etc. from the fuel cell system exhaust stream 450. In particular, the filtering device may filter the fuel cell system exhaust stream 450 before the fuel cell system exhaust stream 450 is emitted from the chimney 314.

Although the sensors 330 are shown in FIG. 3A on the first floor 401 of the building, the sensors 330 may be located at different locations throughout the central duct 310. In particular, the sensors 330 may be located in the central duct 310 on multiple floors. The sensors 330 may be located in the outer duct portion 311 on a side of the first module unit 201 and/or on a side of the second module unit 202. The sensors 330 may also be located in the inner duct portion 312 at one or more locations and on one or more floors of building 400. In at least one embodiment, the sensors 330 may be located in or near the chimney 314 of the central duct 310. In addition, in at least one embodiment, one or more of the blowers or fans 320 may be additionally or alternatively located at multiple locations along the vertical length of the central duct 310.

Thus, the central duct 310 in the first alternative configuration may constitute an exhaust flue that terminates in the chimney 314 which extends through the roof 415 of the building 400. The outlet (i.e., top opening) of the chimney 314 may be located above the top of the building air intake equipment 460, such as an air handler, air intake ducts, etc. located on the roof 415. In this embodiment, the fuel cell system exhaust stream 450 may pass through the central duct 310 (e.g., exhaust flue) and the chimney 314 before being provided through the outlet above the top of the building air intake equipment 460. This may help to avoid the fuel cell system exhaust stream 450 from entering the building air intake equipment 460. Further, the central duct 310 (e.g., exhaust flue) may be fluidly connected to the chimney 314 located on the roof 415 of the building 400, such that the exhaust stream 450 may pass either directly from the central duct 310 to the chimney 314 or indirectly from the central duct 310 through an intermediate duct or pipe to the chimney 314.

In the first alternative configuration of FIG. 3A, the system components 230 may extend horizontally in the x-direction (e.g., into and out of the page in FIG. 3A) between the fuel cell modules 100 and fuel processing module 215 in each of the first module unit 201 and second module unit 202 as illustrated, for example, in FIG. 2A. The system components 230 may additionally or alternatively extend vertically in the z-direction between two or more floors in the building 400. For example, the first system component 231 may extend vertically and connect one or more fuel cell modules 100 in the first module unit 201 on the first floor 401 to one or more fuel cell modules 100 in the first module unit 201 on the second floor 402. The second system component 232 may also extend vertically and connect one or more fuel cell modules 100 in the second module unit 202 on the first floor 401 to one or more fuel cell modules 100 in the second module unit 201 on the second floor 402.

Further, although it is not illustrated in FIG. 3A, the system components 230 may extend across the outer duct portion 311 and connect one or more fuel cell modules 100 in the first module unit 201 on one floor to one or more fuel cell modules 100 in the second module unit 202 on the same floor. In addition or alternatively, the system components 230 may extend across the outer duct portion 311 and connect one or more fuel cell modules 100 in the first module unit 201 on one floor to one or more fuel cell modules 100 in the second module unit 202 on a different floor.

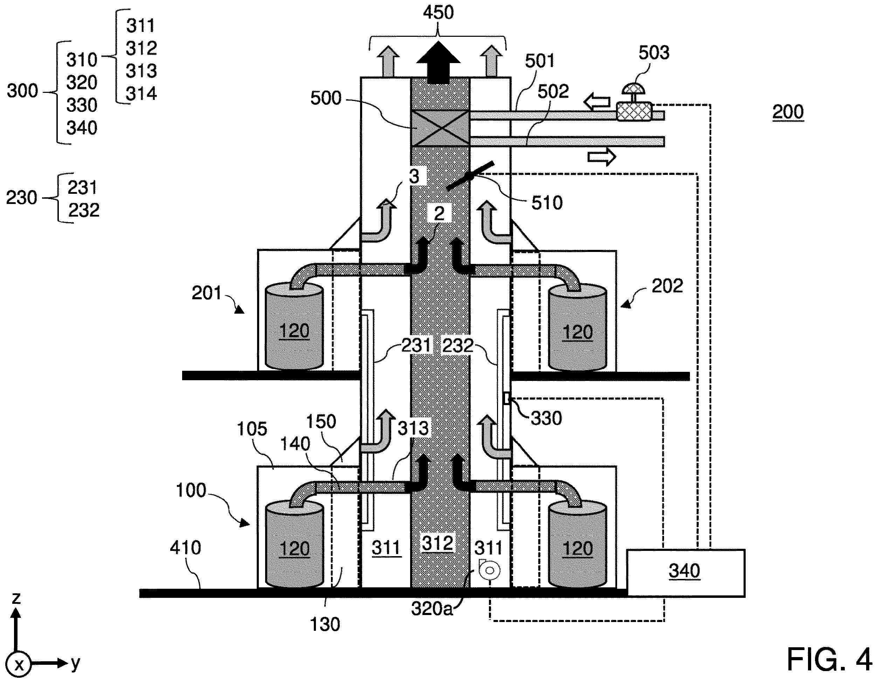

As illustrated in FIG. 3B, the central duct 310 may include a dedicated inner duct portion 312 for each pair of fuel cell modules 100 in the first module unit 201 and the second module unit 202. Alternatively, the central duct 310 may include shared inner duct portion 312 for plural pairs of fuel cell modules 100 in the first module unit 201 and the second module unit 202, as illustrated in FIG. 2A. In some embodiments, the central duct 310 may include a single outer duct portion 311 that is configured to receive cabinet exhaust gas 3 from all of the fuel cell module cabinets 105 and multiple inner ducts portions 312 disposed in the single outer duct portion 311, as shown in FIGS. 2A and 4. In other embodiments, the central duct 310 may include multiple separated outer duct portions 311 in which at least one inner duct portion 312 is disposed.

FIG. 4 illustrates a fuel cell system 200 having a second alternative configuration. This system 200 may be configured for exhaust heat recovery and/or utilization, according to various embodiments of the present disclosure. The like numbered elements described above with respect to FIGS. 3A and 3B will not be described again in this embodiment with respect to FIG. 4.

As described above, the hot reaction exhaust gas 2 may include, for example, an exhaust from an anode tail gas oxidizer (ATO) located in the hot box 120. The ATO may react at least part of the anode exhaust (i.e., fuel exhaust) stream from fuel cells (e.g., fuel cell stacks, columns, etc.) located in the hot box 120 with air, such as the cathode exhaust (i.e., air exhaust) stream from the fuel cells to output oxidized fuel exhaust as the hot reaction exhaust gas 2. The hot boxes 120 may be located inside the fuel cell module cabinets 105 of the fuel cell modules 100. The inner duct portion 312 may be fluidly connected by the connector ducts 313 to the reaction exhaust gas outlet 140a in the reaction exhaust gas conduit 140, while the outer duct portion 311 may be fluidly connected to the cabinet exhaust gas outlet 150a in the cabinet exhaust gas conduit 150 (e.g., see FIG. 1). In contrast, the outer duct portion 311 may be configured to receive relatively cool cabinet exhaust gas 3 from at least one of the fuel cell modules 100.

In one or more embodiments, the fuel cell system 200 may include a heat exchanger 500 disposed in at least one of the inner duct portions 312. The heat exchanger 500 may be configured to transfer heat from the reaction exhaust gas 2 to a fluid (e.g., heat exchanger fluid). For example, the heat exchanger 500 may include a boiler configured to heat water (e.g., water that is provided to the fuel inlet stream in the hot box 120) using heat captured from the reaction exhaust gas 2. In other embodiments, the heat exchanger 500 may be configured to heat the fuel inlet stream, such as liquid natural gas to generate gaseous natural gas which is provided to the hot boxes 120 as fuel for the fuel cells. In at least one embodiment, heat captured by the heat exchanger 500 may be stored using an integrated thermal storage sub-system.

As also illustrated in FIG. 4, the fuel cell system 200 may include one or more diverters 510 in the central duct 310. The diverter 510 may be configured to direct a portion of the reaction exhaust gas 2 from the inner duct portion 312 into the outer duct portion 311 of the central duct 310. Accordingly, the diverter 510 may be configured to prevent overheating of the fluid in the heat exchanger 500. The diverter 510 may be driven, for example, by a motor controlled by the ventilation assembly controller 340.

In addition, the heat exchanger 500 may be connected to an inlet pipe 501 delivering heat exchanger fluid (e.g., water) to the heat exchanger 500. The heat exchanger 500 may also be connected to an outlet pipe 502 delivering the heat exchange fluid away from to the heat exchanger 500. The supply of heat exchanger fluid to the heat exchanger 500 may be regulated by a valve 503 in the inlet pipe 501. The valve 503 may also be driven, for example, by a motor controlled by the ventilation assembly controller 340.

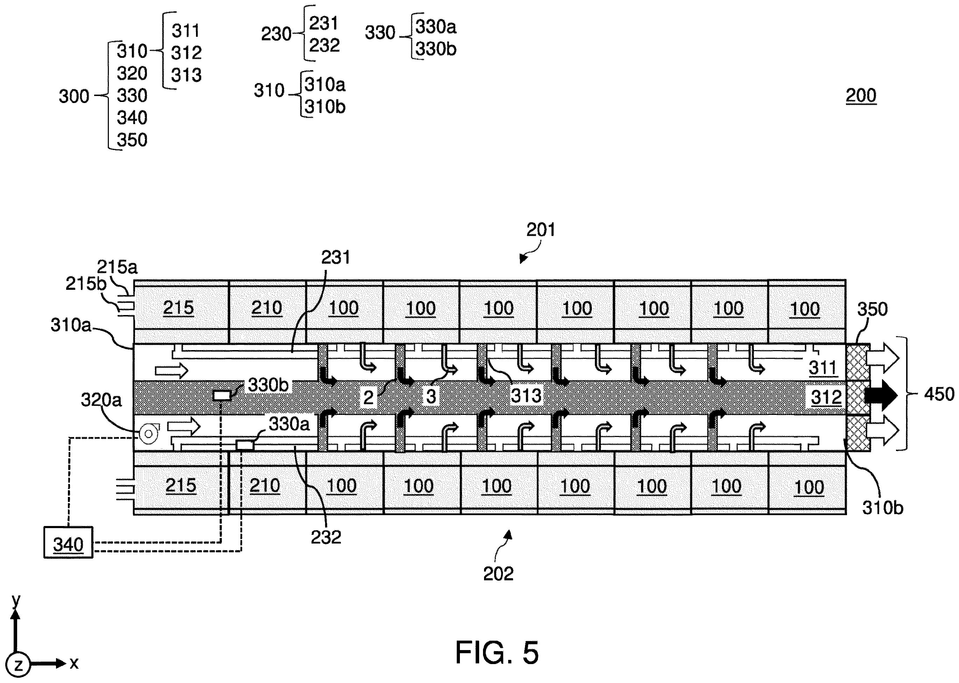

FIG. 5 is a plan view (top-down view) of a fuel cell system 200 having a third alternative configuration according to one or more embodiments. The like numbered elements described above will not be described again in this embodiment with respect to FIG. 5.

In particular, the central duct 310 in the third alternative configuration of FIG. 5 includes the outer duct portion 311 and inner duct portion 312 configured to exhaust the reaction exhaust gas 2 and cabinet exhaust gas 3 horizontally (in the x-direction), as opposed to vertically in the z-direction).

The outer duct portion 311 and inner duct portion 312 may extend longitudinally in the x-direction. The outer duct portion 311 and inner duct portion 312 may have a substantially concentric rectangular cross-section in the y-z plane. The connector ducts 313 may extend in the y-direction from the fuel cell modules 100 to the inner duct portion 312. As illustrated in FIG. 5, the first system components 231 and second system components 232 (e.g., hydrogen lines) may extend longitudinally in the x-direction. The cabinet exhaust gas 3 may be input to the outer duct portion 311 over (or under) the first system components 231 and second system components 232. The connector ducts 313 may extend over (or under) the first system components 231 and second system components 232 to connect to the inner duct portion 312.

The blower 320a of the ventilation assembly 300 may be located at a first end 310a of the central duct 310. The blower 320a may force air horizontally into the outer duct portion 311 and force cabinet exhaust gas 3 toward a second end 310b of the central duct 310. The second end 310b may include openings for exhausting the reaction exhaust gas 2 and cabinet exhaust gas 3 out of the central duct 310. The ventilation assembly 300 may also include one or more filters 350 at the second end 310b to filter the exhaust gas 450 (e.g., mixture of air, reaction exhaust gas 2 and cabinet exhaust gas 3) before the exhaust gas 450 is discharged.

Further, as illustrated in FIG. 5, the sensors 330 in the fifth alternative configuration may include a first sensor 330a in the outer duct portion 311 and a second sensor 330b in the inner duct portion 312. The ventilation assembly controller 340 may control an operation of the blower 320a and/or other devices associated with the ventilation assembly 300, based on a signal from the first sensor 330a and/or the second sensor 330b. The signal may be communicated, for example, by wire or wireless communication.

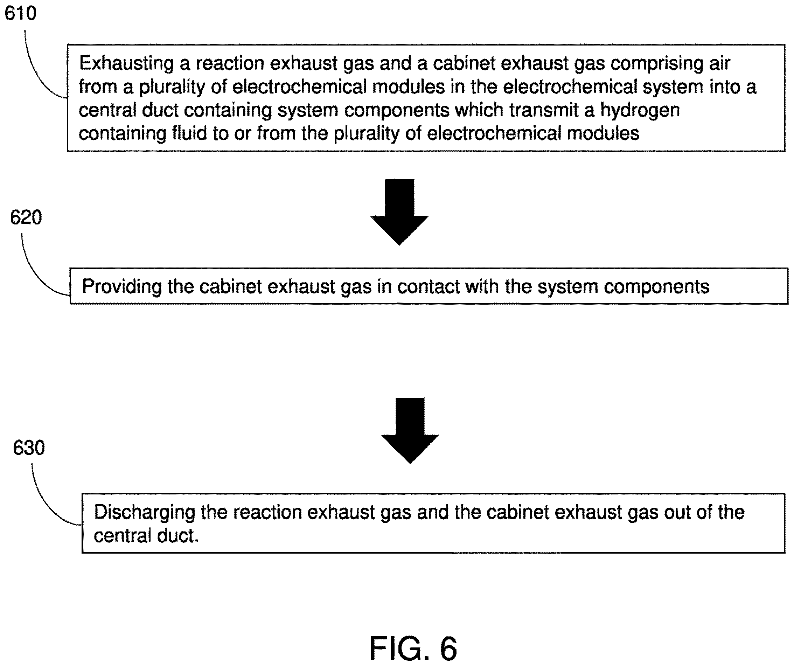

FIG. 6 is a flowchart illustrating a method of a method of ventilating a fuel cell system according to one or more embodiments. Step 610 of the method may include exhausting a reaction exhaust gas and a cabinet exhaust gas comprising air from a plurality of electrochemical modules in the electrochemical system into a central duct containing system components which transmit a hydrogen containing fluid to or from the plurality of electrochemical modules. Step 620 of the method may include providing the cabinet exhaust gas in contact with the system components. Step 630 of the method may include discharging the reaction exhaust gas and the cabinet exhaust gas out of the central duct.

FIGS. 7A-11C are views associated with another electrochemical system according to one or more embodiments. In one embodiment, the electrochemical system of FIGS. 7A - 11C may comprise an electrolyzer system 700.

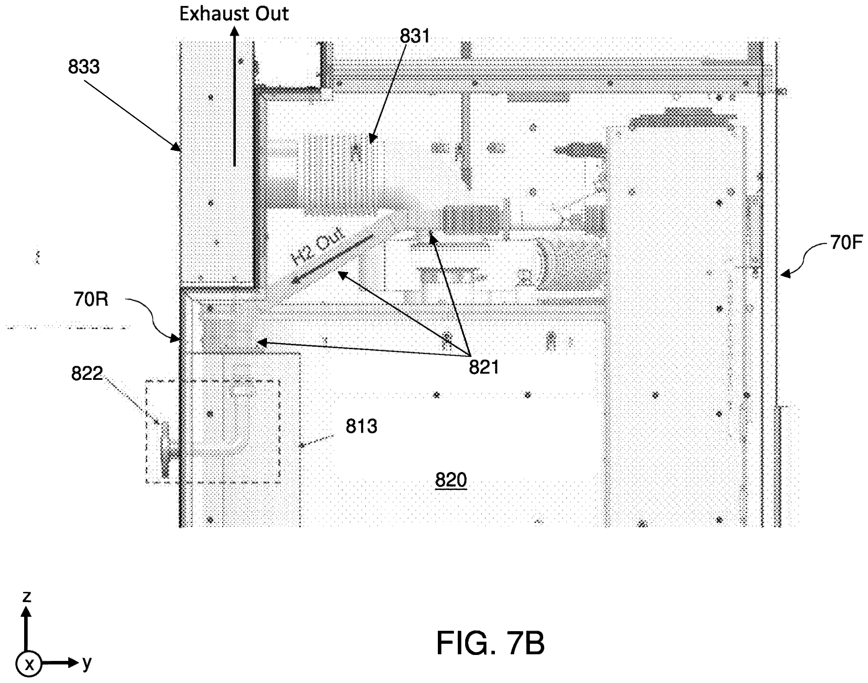

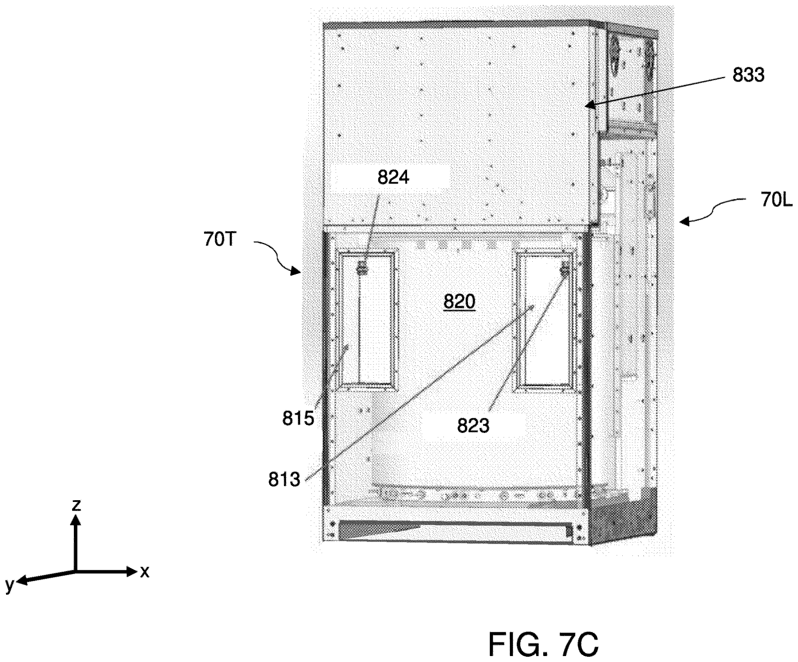

In particular, FIGS. 7A-7C are various views of a generator module 70 (e.g., electrolyzer module which is used as a hydrogen generator module) that may be utilized in the electrolyzer system 700 according to one or more embodiments. FIG. 7A is a side perspective cut-away view of the generator module 70 according to one or more embodiments. FIG. 7B is a left side cut-away view of the generator module 70 according to one or more embodiments. FIG. 7C is a rear perspective cut-away view of the generator module 70 according to one or more embodiments.

The generator module 70 may have a configuration that is similar to the configuration of the fuel cell module 100 in FIG. 1. The generator module 70 may include a housing 811. The housing 811 may be formed of metal or other suitable materials. In FIG. 7A, for ease of understanding, a portion of the housing 811 on a front side 70F of the generator module 70 has been omitted and a portion of the housing 811 on a left side 70L of the generator module 70 is shown as transparent. The right side 70T of the generator module 70 is located opposite to the left side 70L, as shown in FIG. 7C.

As illustrated in FIG. 7A, the generator module 70 may include an electrolyzer compartment 812 and an electronics compartment 814 located in the housing 811. The electrolyzer compartment 812 and electronics compartment 814 may include air-space separated regions. The electrolyzer compartment 812 may house a hot box 820 similar to the hot box 120 in the fuel cell module 100 (see FIG. 1). The hot box 820 may include a hydrogen generating element including one or more electrolyzer cells, such as solid oxide electrolyzer cells (SOECs), such as electrolyzer stacks or columns. The electronics compartment 814 may be located adjacent (e.g., over) the electrolyzer compartment 812. The electronics compartment 814 may house the electronics system including one or more electronic devices and electronic circuitry (e.g., power converters) for providing electric power (e.g., current and/or voltage) to the electrolyzer cells during operation of the generator module 70.

The electrolyzer compartment 812 and electronics compartment 814 can be separated using sheet metal, gaskets, cable conduits, and the like. In some embodiments, an air pressure differential between the electronics compartment 812 and electrolyzer compartment 814 may be maintained by using ventilation fans. A first plumbing junction box 813 (e.g., rear plumbing junction box) may be located in the electrolyzer compartment 812.

As illustrated in FIG. 7B, the first plumbing junction box 813 may be accessible from a rear side 70R of the housing 811 of the generator module 70 which is opposite the front side 70F. The first plumbing junction box 813 is fluidly connected to the hot box 820 by outlet plumbing 821 (e.g., one or more outlet conduits, such as one or more pipes and/or manifolds). The hydrogen gas (e.g., hydrogen product) produced by the electrolyzer cells in the hot box 820 may be transported out of the hot box 820 by the generator module outlet plumbing 821 and into the first plumbing junction box 813. The hydrogen gas may then be transported out of the generator module 70 via the first plumbing junction box 813.

The generator module 70 may include first adaptor plumbing 822 (e.g., optional balance of plant adapter plumbing) for connecting the generator module 70 to a remainder of the electrolyzer system 700. The hydrogen produced in the electrolyzer compartment 812 of the generator module 70 may be collected and compressed by the electrolyzer system 700. The electrolyzer system 700 may optionally include one or more compressors (not shown in FIGS. 7A - 7C) located downstream of the generator module 70 and piping for transporting the hydrogen produced in the generator module 70 to the one or more compressors.

The generator module 70 may also include exhaust outlet plumbing 831 (e.g., one or more exhaust conduits, such as one or more pipes and/or manifolds) and an exhaust manifold 833. The exhaust outlet plumbing 831 fluidly connects the hot box 820 to the exhaust manifold 833. The exhaust outlet plumbing 831 provides the generator module 70 exhaust which includes the hot box 820 exhaust (e.g., oxygen or oxygen enriched air) and optionally the cabinet 811 ventilation exhaust to the exhaust manifold 833. The exhaust manifold 833 may output the generator module 70 exhaust upwards and/or horizontally out of the generator module 70.

In FIG. 7C, a portion of the housing 811 on the rear side 70R of the generator module 70 is shown as transparent for ease of understanding. As illustrated in FIG. 7C, a hydrogen outlet 823 connected to the generator module outlet plumbing 821 (see FIG. 7B) may be located in the first plumbing junction box 813. The first adaptor plumbing 822 (see FIG. 7B) may be connected to the hydrogen outlet 823.

As further illustrated in FIG. 7C, the generator module 70 may also include a second plumbing junction box 815 on the rear side 70R of the generator module 70. A steam inlet 824 may be located in the second plumbing junction box 815. The generator module 70 may support both internal steam generation and external steam generation configurations. In an internal steam generation configuration, a steam source, such as a steam generator (e.g., a heat exchanger and/or heater) may be located in the generator module housing 811. In this configuration, the steam inlet 824 may be coupled to a water pipe. In an external steam generation configuration, an external steam source may be located outside the generator module housing 811 and fluidly connected to the generator module housing 811 by a steam conduit. In this configuration, the steam inlet 824 may be coupled to the steam conduit. The generator module 70 may further support the capability to switch between internal and external steam sources.

Water (e.g., liquid water and/or steam) may be supplied to the steam inlet 824 at the second plumbing junction box 815 or another junction box. In at least one embodiment, the hydrogen outlet 823 may be located at the first plumbing junction box 813 and the steam inlet 824 may be located at the second plumbing junction box 815. Each of the first plumbing junction box 813 and the second plumbing junction box 815 may include a flexible hose for ease of connections. The first plumbing junction box 813 and the second plumbing junction box 815 do not increase a footprint of the generator module 70.

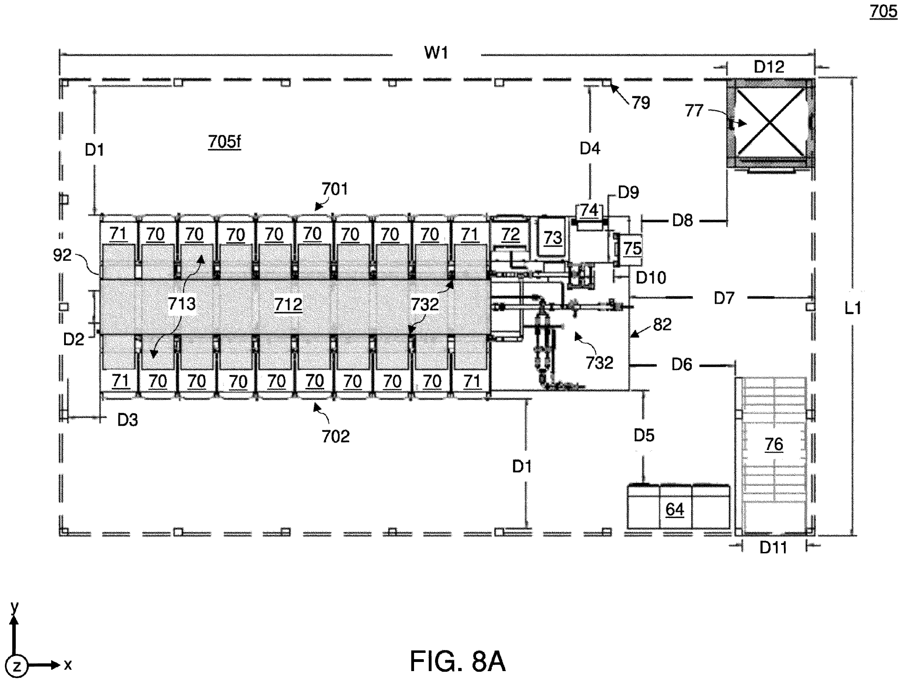

FIGS. 8A-8E are views of the electrolyzer system 700 according to one or more embodiments.

Similar to the fuel cell system 200 described above, the electrolyzer system 700 may manage SOEC heat and ventilation through use of a central duct 712 located adjacent (e.g., behind and between) the generator modules 70. The central duct 712 collects the ventilation exhaust and uses the chimney effect to bring the exhaust away from the generator modules 70.

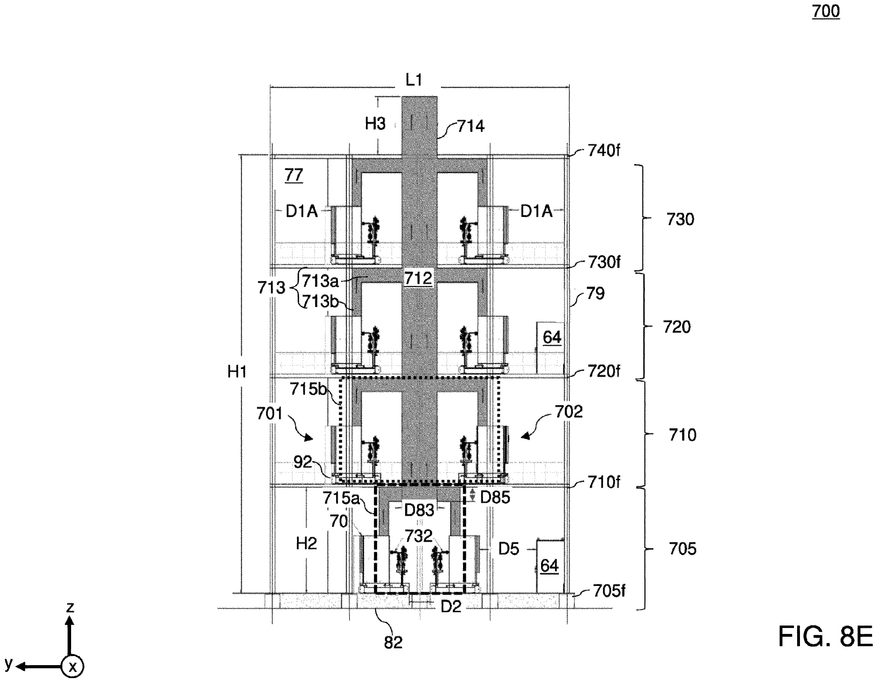

As illustrated in FIGS. 8A-8E, the electrolyzer system 700 may include a multi-level system where the generator modules 70 (e.g., rows of generator modules) are located in different vertical levels (e.g., on a multilevel support and/or on different floors of a building), and include common hydrogen product collection and exhaust management. The electrolyzer system 700 may address the additional complexity of managing the hydrogen collection in the space that would typically be occupied by a central exhaust collection element. In one embodiment, the electrolyzer system 700 may include hydrogen collection from generator modules 70 located in different vertical levels. In one embodiment, the electrolyzer system 700 is both modular (e.g., includes separate, independently serviceable electrolyzer modules 70) and a highly dense multi-level system. While a four level system is shown in FIG. 8E, the system 700 may include two, three or more than four (e.g., five through twenty) levels.

FIG. 8A is a schematic view of a first level layout 705 of the electrolyzer system 700 according to one or more embodiments. The electrolyzer system 700 may be a multi-level system (e.g., electrolyzer "tower") including two or more levels of electrolyzer generator modules 70. The first level layout 705 may include, for example, a ground floor of the electrolyzer tower (e.g., see FIG. 8E).

As illustrated in FIG. 8A, the first level layout 705 may include ground floor 705f (e.g., a building floor or a bottom of a multi-level support structure) having a length L1 in the y-direction in a range from 30 ft to 50 ft and a width W1 in the x-direction in a range from 60 ft to 80 ft. The first level layout 705 may have an open layout, closed layout or combination of open and closed layout. In at least one embodiment, at least a portion of the first level layout 705 is closed and the ground floor 705f is bounded by a wall at the closed portion. The first level layout 705 may further include a stairway 76 connecting ground floor 705f to over levels of the tower. The stairway 76 may have a width D11 in the x-direction in a range from 5 ft to 7 ft. The first level layout 705 may further include a lift 77 (e.g., elevator) for vertically moving personnel, material, equipment, supplies, etc. to and from the ground floor 705f. The lift 77 may have a width D12 in the x-direction in a range from 6 ft to 7 ft.

The first level layout 705 may further include a first module unit 701 including one or more generator modules 70 and one or more power modules 71 (e.g., power conditioning modules). The first module unit 701 may comprise a row of generator modules 70 and one or more power modules 71. The power modules 71 may be electrically coupled to the generator modules 70. The power modules 71 may include inverters which convert alternating current (AC) power supplied from an external power source (e.g., power grid) to direct current (DC) and supply the DC power to the generator modules 70.

The second module unit 702 may also include one or more generator modules 70 and one or more power modules 71 (e.g., power conditioning modules). The second module unit 702 may comprise a second row of generator modules 70 and one or more power modules 71. The power modules 71 in the second module unit 702 may be electrically coupled to the generator modules 70 in the second module unit 702.

The second module unit 702 may be located adjacent the first module unit 701. In at least one embodiment, a number of generator modules 70 in the first module unit 701 may be the same as a number of generator modules 70 in the second module unit 702, and a number of power modules 71 in the first module unit 701 may be the same as a number of power modules 71 in the second module unit 702. In at least one embodiment, the generator modules 70 in the first module unit 701 may be substantially aligned in a first row in the y-direction with the generator modules 70 in a second row in the second module unit 702, and the power modules 71 in the first module unit 701 may be substantially aligned in the y-direction with the power modules 71 in the second module unit 702. Optional support columns 79 may be provided in the system 700. The support columns 79 may comprise building support columns or vertical support struts of a support structure. The first module unit 701 may be separated from a column 79 at an edge of the ground floor 705f by a distance D1 in the y-direction in a range from 10 ft to 14 ft. The second module unit 702 may also be separated from a column 79 at the edge of the ground floor 705f by the distance D1.

In one embodiment, the first module unit 701 and second module unit 702 may be arranged so that the rear side 70R (see FIG. 7C) of the generator modules 70 in the first module unit (e.g., first module row) 701 may face the rear side 70R of the generator modules 70 in the second module unit (e.g., second module row) 702, respectively. A central duct 712 may be located between the first module unit 701 and the second module unit 702 in the plan view. The generator modules 70 and power modules 71 in the first module unit 701 and the second module unit 702 may be independently connected to the central duct 712 by connector ducts 713. The connector ducts 713 may extend in the y-direction from the generator modules 70 and power modules 71 to the central duct 712. In at least one embodiment, the connector ducts 713 may connect a rear side 70R of the generator modules 70 to the central duct 712 by connector ducts 713. The connector ducts 713 may be fluidly connected (e.g., directly or indirectly connected) to the exhaust manifolds 833 of the generator modules 70. The power modules 71 may also include exhaust manifolds which are fluidly connected to the respective connector ducts 713 to provide the ventilation exhaust from the power modules 71 to the connector ducts 713.

Each of the generator modules 70 and power modules 71 in the first module unit 701 and the second module unit 702 may be mounted on skids 92 (e.g., see FIG. 8E) or on a concrete base. A distance D2 in the y-direction between the skids 92 in the first module unit 701 and the second module unit 702 may be in a range from 2 ft to 4 ft. A distance D3 in the x-direction between a column 79 at an edge of the ground floor 705f and the first module unit 701 and between a column 79 at the edge of the ground floor 705f and the second module unit 702 may also be in a range from 2 ft to 4 ft.

The first level layout 705 may also include one or more power distribution units 64 located near an edge of the floor 705p. In at least one embodiment, the power distribution units 64 may be located near the stairway 76. In at least one embodiment, the first level layout 705 may include a gas distribution module 72 adjacent the first module unit 701. The first level layout 705 may also include a telemetry control unit 73 adjacent the gas distribution module 72.

The first level layout 705 may also include a heat trace control panel 74 and an uninterruptible power supply 75 (UPS). The first level layout 705 may also include system components 732 (e.g., BOP components) coupled to the first module unit 701 and/or the second module unit 702. At least a portion of the system components 732 may be located between the first module unit 701 and the second module unit 702. The system components 732 may include, for example, pipes, pumps, valves, etc. In at least one embodiment, the system components 732 may include a water source (e.g., water line), a hydrogen product collector line, and hydrogen compression and processing equipment. The hydrogen compression and processing equipment may supply hydrogen at pressure to the gas distribution module 72.

The first level layout 705 may also include a pad 82 on the ground floor 705f. The pad 82 may be a concrete pad. The pad 82 may include, for example, a cast-in-place (CIP) pad. One or more elements of the first level layout 705 (e.g., system components 732, heat trace control panel 74, UPS 75, etc.) may be located on the pad 82. At least a portion of the system components 732 may be located on the pad 82.

The heat trace control panel 74 may be separated from a column 79 at the edge of the floor 705p by a distance D4 in a range from 9 ft to 13 ft. The pad 82 may be separated from the power distribution units 64 in the y-direction by a distance D5 in a range from 7 ft to 10 ft. The pad 82 may be separated from the stairway 76 in the x-direction by a distance D6 in a range from 8 ft to 12 ft. The pad 82 may be separated from an edge of the ground floor 705f in the x-direction by a distance D7 in a range from 15 ft to 20 ft.

The UPS 75 may be separated from the material lift 77 (e.g., a line extending in the y-direction from an inner side of the material lift 77) in the x-direction by a distance D8 in a range from 6 ft to 10 ft. A distance D9 in the y-direction from the heat trace control panel 74 to a lower side of the UPS 75 may be in a range from 2 ft to 4 ft. A distance D10 from an edge of the pad 82 to a rear side of the UPS 75 may be in a range from 1 ft to 3 ft.

In the first level layout 705, the gas distribution module 72 may be configured to supply the first module unit 701 and the second module unit 702 with start-up hydrogen. In one embodiment, the gas distribution module 720 may independently supply each of the generator modules 70 with start-up hydrogen. The generator modules 70 may use fresh hydrogen gas for start-up, shutdown and when they are not producing hydrogen. The gas distribution module **72** may include various sensors and devices such as pressure detectors, thermal detectors, a gas safety shutoff, and a purge gas distributor.

The system components 732 may include one or more hydrogen collection conduits (e.g., lines, pipes and/or manifolds) configured to collect hydrogen product for integration with a downstream compression system. The conduits may be configured to inhibit (e.g., prevent) condensate backflow into the generator modules 70. Various condensate monitoring and control devices as well as a water return conduit connected to a water outlet may be provided on the hydrogen collection conduits.

In the first level layout 705, the system components 732 (e.g., hydrogen collection conduits) may be coupled to a rear surface and/or upper surface of generator modules 70 depending upon configuration and consideration of space availability. A servicing aisle (not shown) may be located between the first module unit 701 and second module unit 702 to allow for servicing the system components 732. The servicing aisle may have a width in the y-direction in a range from 3 ft to 6 ft. If the installation site cannot accommodate the space of servicing aisle, the system components 732 may be located over the generator modules 70.

In one embodiment, the system components 732 (e.g., hydrogen collection conduits) may be heated by cathode exhaust from the generator modules 70 and internal condensate management may be omitted. In another example, some of the system components 732 (e.g., hydrogen collection conduits) may be coupled to the rear side 70R of the generator modules 70 even when other system components 732 are located above the generator modules 70.

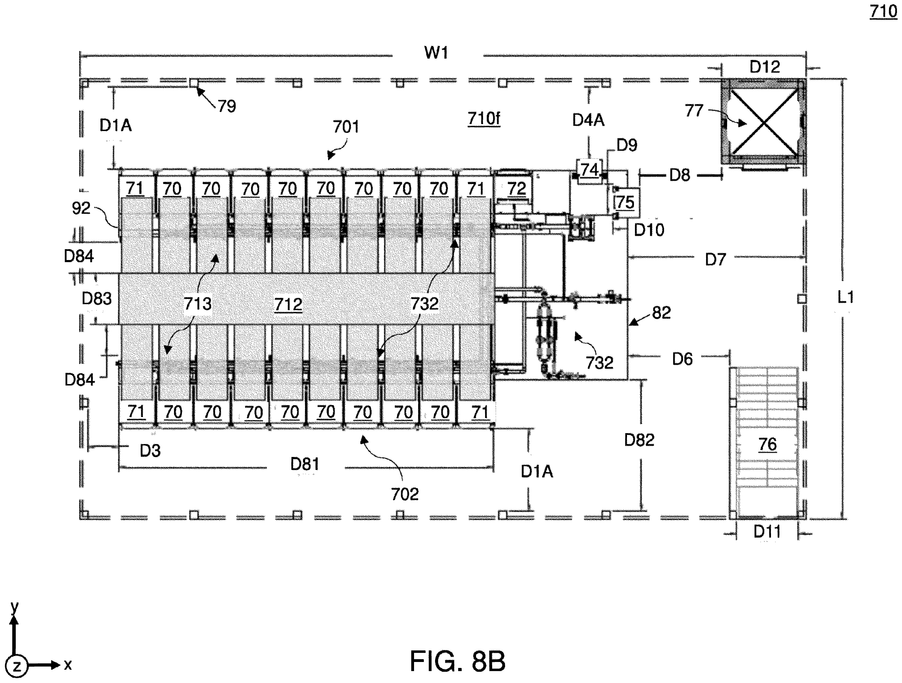

FIG. 8B is a schematic view of a second level layout 710 of the electrolyzer system 700 according to one or more embodiments. The second level layout 710 may be included in a first floor (above the ground floor) of the electrolyzer system 700 (e.g., see FIG. 8E).

As illustrated in FIG. 8B, the second level layout 710 may be substantially similar to the first level layout 705 in FIG. 8A. Thus, the description of the elements and the layout of the elements in the first level layout 705 may also be applied to the second level layout 710 unless otherwise noted.

In contrast to the first level layout 705, the second level layout 710 may omit a telemetry control unit 73 adjacent the gas distribution module 72. In further contrast to the first level layout 705, the second level layout 710 may omit the power distribution unit(s) 64 adjacent the stairway 76. Further, as illustrated in FIG. 8B, a distance D1A between the first module unit 701 and a column 79 at the edge of the first floor 710f and between the second module unit 702 and a column 79 at the edge of the first floor 710f may be in range from 7 ft and 9 ft. The heat trace control panel 74 may be separated from a column 79 at the edge of the floor 705p by a distance D4A in a range from 5 ft to 9 ft. A length D81 in the x-direction of each of the first module unit 701 and the second module unit 702 may be in a range from 32 ft to 42 ft. A distance D82 in the y-direction between the pad 82 and a column 79 at an edge of the first floor 710f may be in a range from 11 ft and 15 ft. A length D83 of the central duct 712 in the y-direction may be in a range from 4 ft to 6 ft. The length D83 of the central duct 712 may be substantially uniform throughout the electrolyzer system 700. A distance D84 in the y-direction between the central duct 712 and the skids 92 in the first module unit 701 and the second module unit 702 may be in a range from 2 ft to 4 ft.

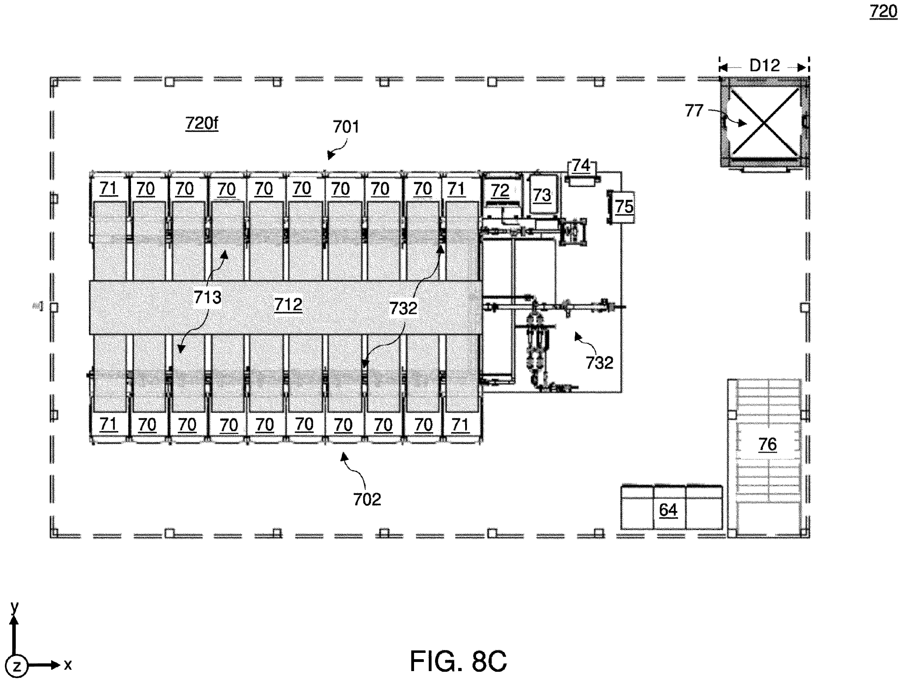

FIG. 8C is a schematic view of a third level layout 720 of the electrolyzer system 700 according to one or more embodiments. The third level layout 720 may be included in a second floor (above the first floor) of the electrolyzer system 700 (e.g., see FIG. 8E).

As illustrated in FIG. 8C, the third level layout 720 may be substantially similar to the second level layout 710 in FIG. 8B. Thus, the description of the elements and the layout of the elements in the second level layout 710 may also be applied to the third level layout 720 unless otherwise noted.

In contrast to the second level layout 710 in FIG. 8B, the third level layout 720 may include a telemetry control unit 73 adjacent the gas distribution module 72. In further contrast to the second level layout 710, the third level layout 720 may include one or more power distribution units 64 at an edge of the second floor 720f and adjacent the stairway 76.

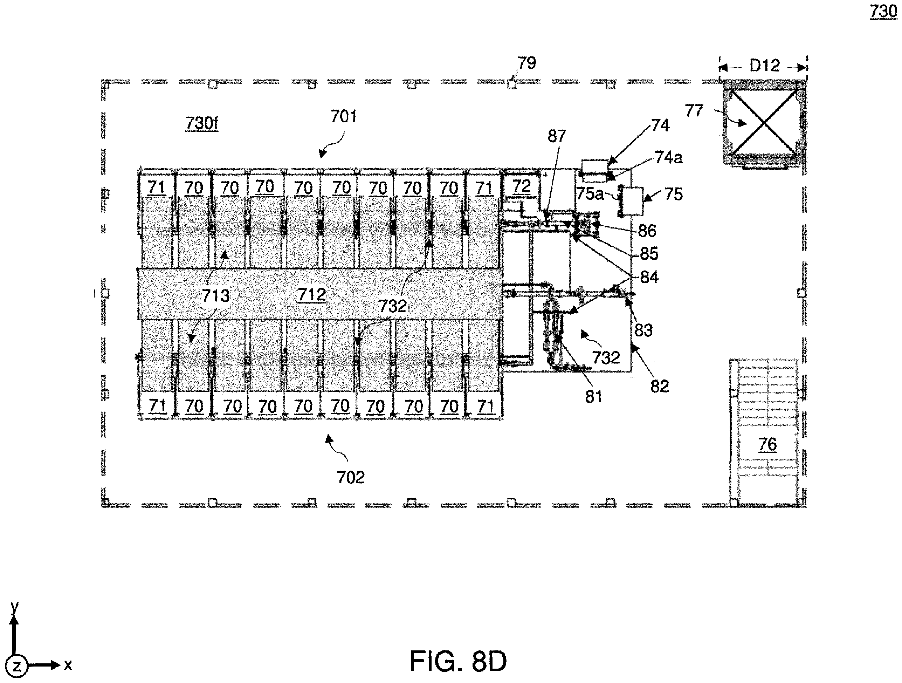

FIG. 8D is a schematic view of a fourth level layout 730 of the electrolyzer system 700 according to one or more embodiments. The fourth level layout 730 may be included in a third floor (above the second floor) of the electrolyzer system 700 (e.g., see FIG. 8E).

The fourth level layout 730 may be substantially similar to the second level layout 710 in FIG. 8B. Thus, the description of the elements and the layout of the elements in the second level layout 710 may also be applied to the fourth level layout 730 unless otherwise noted.

As illustrated in FIG. 8D, the fourth level layout 730 may include the first module unit 701 and second module unit 702 located on a third floor 730f. In the fourth level layout 730, a disconnect 74a (e.g., a 600 amp disconnect) may be located adjacent the heat trace control panel 74. In at least one embodiment, the disconnect 74a may be connected to the heat trace control panel 74. A panel board 75a may also be located adjacent the UPS 75. In at least one embodiment, the panel board 75a may be connected to the UPS 75. The fourth level layout 730 may include a support 81 on the pad 82. The support 81 may be used to support at least a portion of the system components 732 (e.g., conduits). The fourth level layout 730 may also include a hydrogen product line outlet 83, a condensate outlet 84, a communication box 85, a hydrogen vent manifold exhaust 86, and a hydrogen input line 87.

It should be noted that one or more of the disconnect 74a, panel board 75a, support 81, hydrogen product line outlet 83, condensate outlet 84, communication box 85, hydrogen vent manifold exhaust 86 and hydrogen input line 87 may also be included in the first level layout 705, second level layout 710 and third level layout 720.

FIG. 8E is a vertical cross-sectional view (e.g., side elevation) of the electrolyzer system 700 (e.g., electrolyzer tower) according to one or more embodiments. As illustrated in FIG. 8E, the electrolyzer system 700 may include the ground floor 705f, first floor 710f, second floor 720f and third floor 730f. The electrolyzer system 700 may also include a terrace floor 740f (e.g., roof). The central duct 712 may extend vertically from a space above the ground floor 705f to the terrace floor 740f. Furthermore, as shown in FIGS 8A - 8C, the central duct 712 may also extend the entire lengths of the first and second module units 701 and 702. An exhaust duct 714 (e.g., chimney or exhaust pipe) may be connected to the central duct 712 and extend above the terrace floor 740f. A distance H1 from the ground floor 705f to the terrace floor 740f (e.g., a height of the electrolyzer tower) may be in a range from 50 ft to 70 ft. A distance H2 between the floors of the electrolyzer tower (e.g., between the ground floor 705f and the first floor 710f, between the first floor 710f and second floor 720f, etc.) may be in a range from 13 ft to 17 ft. A height H3 of the exhaust duct 714 may be in a range from 6 ft to 10 ft.

The connector duct 713 may include a connector duct horizontal portion 713a connected to the central duct 712, and a connector duct vertical portion 713b connected to the generator modules 70 (and the power modules 71). A height D85 of the connector duct horizontal portion 713 may be in a range from 1 ft to 3 ft.

The generator modules 70 (and the power modules 71) may be mounted on the skids 92, respectively. The skids 92 may have a length in the y-direction that is greater than a width of the generator modules 70 (and the power modules 71). In at least one embodiment, a portion of the system components 732 may be located on the skids 92. The skids 92 on each of the ground floor 705f may be separated in the y-direction by the distance D2 (see FIG. 8A). The skids 92 on each of the first floor 710f, second floor 720f and third floor 730f may be separated in the y-direction by the distance D83 + (2 x D84) (see FIG. 8B).

In the embodiment of FIGS. 8A - 8E, the system components 732 configured to transmit a fluid comprising hydrogen gas (e.g., the hydrogen collection conduits) are located in the same volume as the ventilation assembly comprising the central duct 712 and the connector ducts 713. For example, as shown in FIG. 8E, the system components 732 on the ground floor 705f are located below the central duct 712, in the same rectangular volume 715a occupied by the central duct 712 and the system components 732. The system components 732 located on higher floors 710f to 730f are located below the connector ducts 713 and laterally adjacent to the central duct in the same rectangular volume 715b occupied by the central duct 712, the connector ducts 713 and the system components 732.

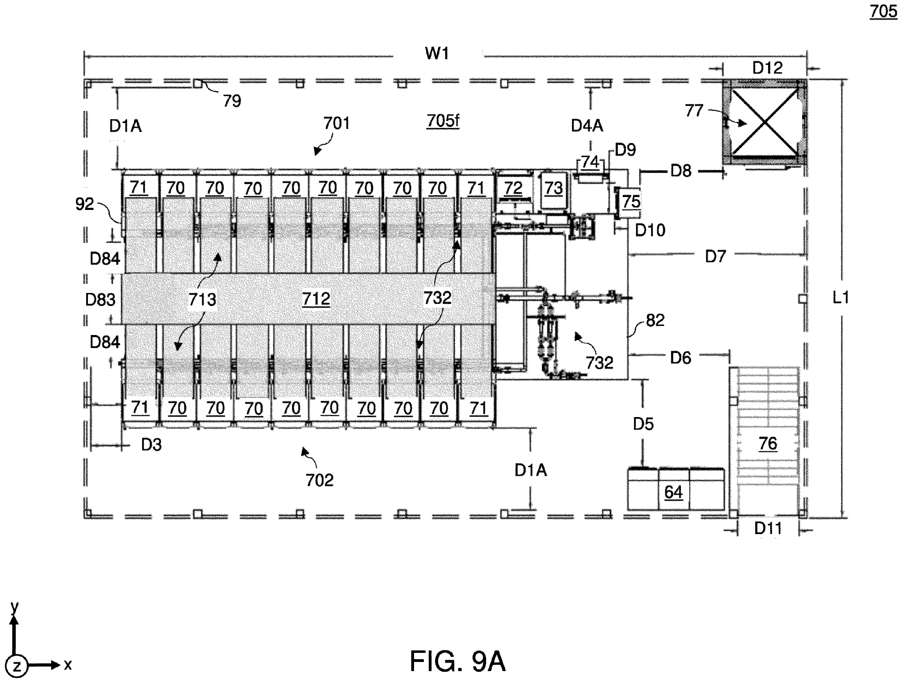

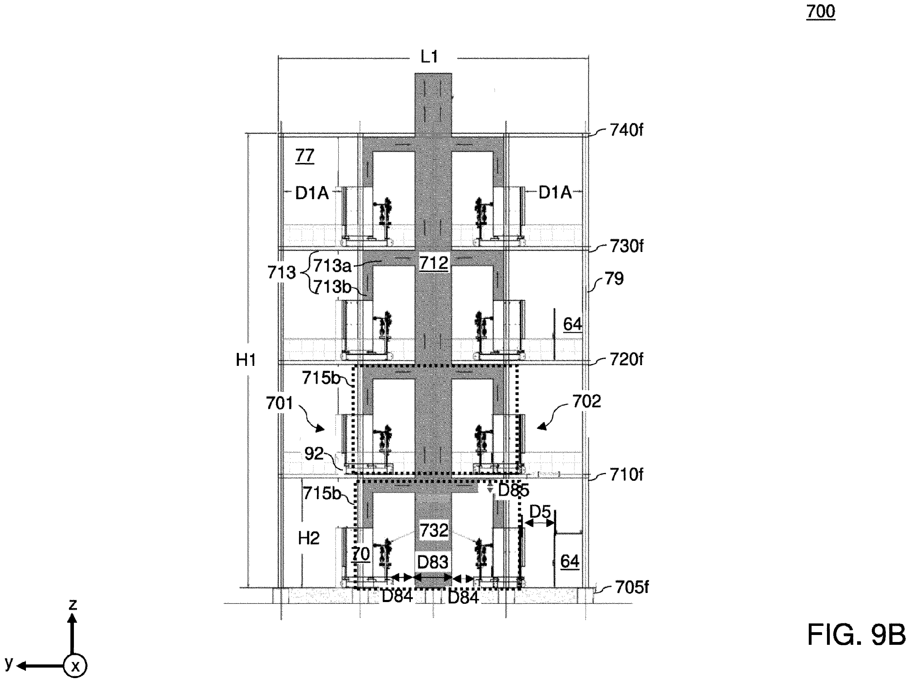

FIGS. 9A-9B are schematic views of the electrolyzer system 700 having a first alternative configuration according to one or more embodiments. FIG. 9A is a schematic view of a first level layout 705 of the electrolyzer system 700 having the first alternative configuration according to one or more embodiments. FIG. 9B is a vertical cross-sectional view (e.g., side elevation) of the electrolyzer system 700 (e.g., electrolyzer tower) having the first alternative configuration according to one or more embodiments.

The system 700 of FIG. 9B differs from the system 700 of FIG. 8E in that the system components 732 located on all floors (including the ground floor) are located below the connector ducts 713 and laterally adjacent to the central duct in the same rectangular volume 715b occupied by the central duct 712, the connector ducts 713 and the system components 732. Thus, the volume 715a of FIG. 8E is not present in the system 700 of FIG. 9B.

The electrolyzer system 700 having the first alternative configuration may also include the second level layout 710, third level layout 720 and fourth level layout 730 as described above in the original configuration of the electrolyzer system 700 (see FIGS. 8B-8D).

As illustrated in FIG. 9A, the first level layout 705 in the first alternative configuration may be substantially the same as the third level layout 720 in the system 700 of FIG. 8C. In particular, each of the first module unit 701 and the second module unit 702 may be separated from a column 79 at an edge of the first floor 705f by the distance D1A in a range from 6 ft to 10 ft. The heat trace control panel 74 may be separated from a column 79 at the edge of the floor 705p by a distance D4A in a range from 5 ft to 9 ft. The length D83 of the central duct 712 in the y-direction may be in a range from 4 ft to 6 ft. The distance D84 in the y-direction between the central duct 712 and the skids 92 in the first module unit 701 and the second module unit 702 may be in a range from 2 ft to 4 ft. The first level layout 705 in the first alternative configuration may also include a telemetry control unit 73 adjacent the gas distribution module 72 and one or more power distribution units 64 adjacent the stairway 76. The distance D5 between the pad 82 and the power distribution units 64 may be in a range from 7 ft to 10 ft.

As illustrated in FIG. 9B, the electrolyzer system 700 (e.g., electrolyzer tower) in the first alternative configuration may be substantially the same as the electrolyzer system 700 of FIG. 8E. However, in contrast to the in FIG. 8E, in the first alternative configuration, the skids 92 on the ground floor 705f in the first level layout 705 may be separated in the y-direction by the distance D83 + (2 x D84). In particular, on each of the ground floor 705f, first floor 710f, second floor 720f and third floor 730f, the skids 92 may be separated in the y-direction by the same distance (e.g., D83 + (2 x D84)).

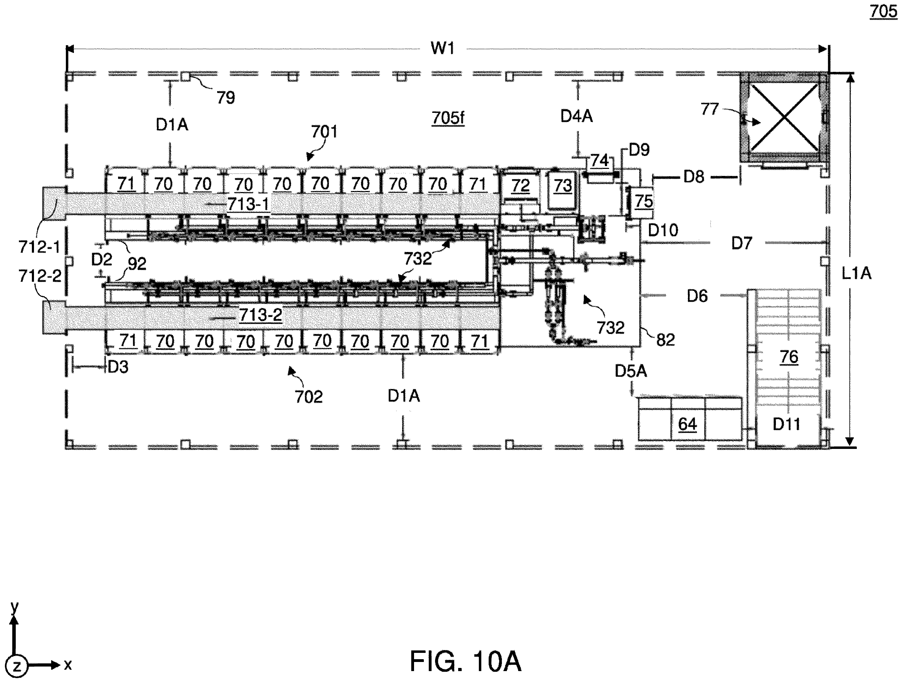

FIGS. 10A-10F are views of the electrolyzer system 700 having a second alternative configuration according to one or more embodiments. As illustrated in FIGS. 10A-10F, the electrolyzer system 700 having the second alternative configuration may include a multi-level system (e.g., electrolyzer tower) including hydrogen collection process exhaust management. In this configuration, the more than one central duct may be provided. Furthermore, the connecting ducts include portions which extend horizontally along the x-direction and are fluidly connected to vertical central ducts located laterally adjacent to the module units along the x-direction.

FIG. 10A is a schematic view of a first level layout 705 of the electrolyzer system 700 having the second alternative configuration according to one or more embodiments. As illustrated in FIG. 10A, the first level layout 705 in the second alternative configuration may be substantially the same as the first level layout 705 in the original configuration (see FIG. 8A). In particular, the first level layout 705 in the second alternative configuration may include the first module unit 701 and the second module unit 702. The skids 92 for the first module unit 701 and the skids 92 for the second module unit 702 may be separated by the distance D2 in the y-direction.

The first level layout 705 in the second alternative configuration may also include the system components 732 (e.g., hydrogen collection conduits). The first level layout 705 in the second alternative configuration may also include the gas distribution module 72, the telemetry control unit 73, the heat trace control panel 74 and the UPS 75. The first level layout 705 in the second alternative configuration may also include the one or more power distribution units 64, the stairway 76, the material lift 77 and the pad 82. Further, the ground floor 705f may have the width W1 in the x-direction.

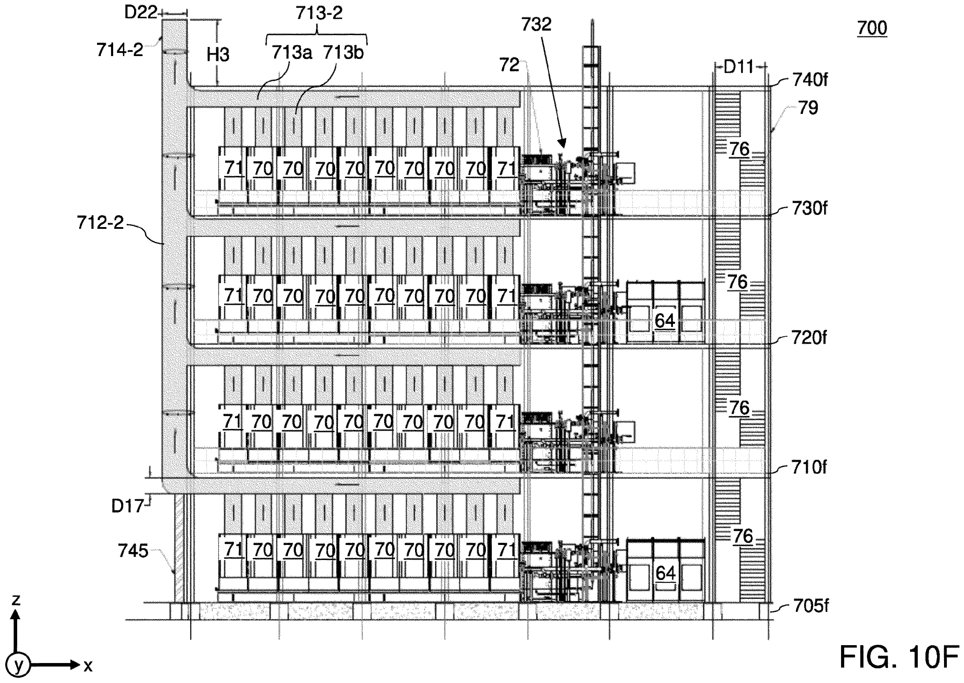

In contrast to first level layout 705 in the original configuration of FIG. 8A, the first level layout 705 having the second alternative configuration may include a first central duct 712-1 servicing the first module unit 701 and a second central duct 712-2 servicing the second module unit 702. The first central duct 712-1 and second central duct 712-2 may extend vertically in the z-direction (e.g., out of the page in FIG. 10A) and service each floor of the electrolyzer system 700 (e.g., electrolyzer tower). The first level layout 705 having the second alternative configuration may also include a first connector duct 713-1 connecting the generator modules 70 and power modules 71 of the first module unit 701 to the first central duct 712-1, and a second connector duct 713-2 connecting the generator modules 70 and power modules 71 of the second module unit 702 to the second central duct 712-2. The connector ducts 713-1 and 713-2 include portions (713a shown in FIG. 10F) which extend horizontally in the x-direction above the module units 701, 702 and are fluidly connected to the respective central ducts 712-1, 712-2 which are laterally offset form the module units 701, 702 along the x-direction.

Furthermore, the ground floor 705f may have a length L1A in the y-direction in a range from 20 ft to 50 ft. Each of the first module unit 701 and the second module unit 702 may be separated from a column 79 at an edge of the first floor 705f by the distance D1A in a range from 6 ft to 10 ft. The pad 82 and the power distribution units 64 may be separated by a distance D5A in a range from 3 ft to 7 ft. The heat trace control panel 74 may be separated from a column 79 at the edge of the floor 705f by a distance D4A in a range from 5 ft to 9 ft.

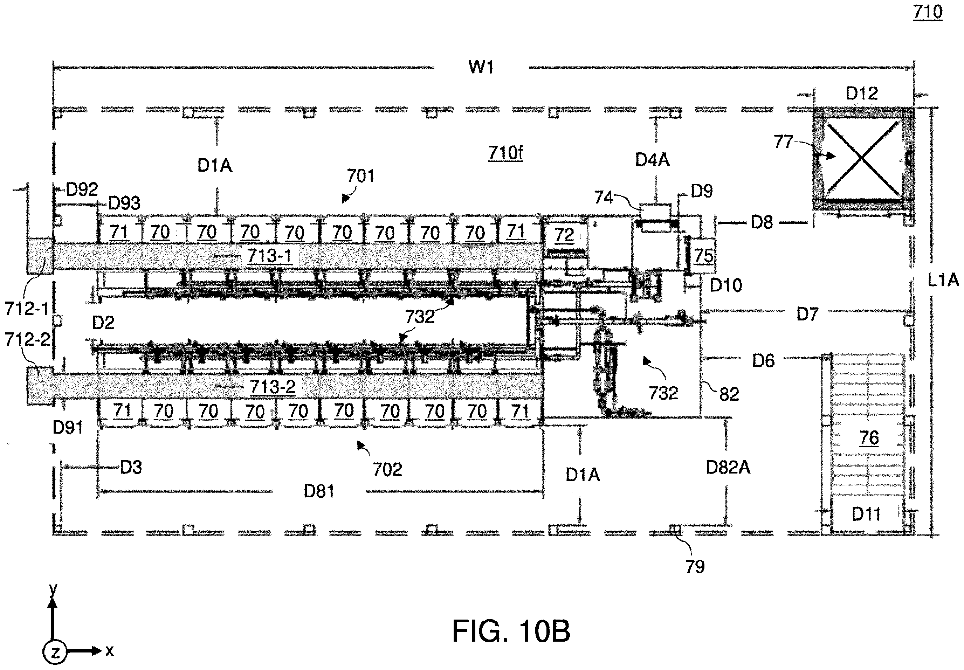

FIG. 10B is a schematic view of a second level layout 710 of the electrolyzer system 700 having the second alternative configuration according to one or more embodiments. As illustrated in FIG. 10B, the second level layout 710 may be substantially similar to the first level layout 705 in FIG. 10A. Thus, the description of the elements and the layout of the elements in the first level layout 705 may also be applied to the second level layout 710 unless otherwise noted.

In contrast to the first level layout 705 in FIG. 10A, the second level layout 710 may omit a telemetry control unit 73 adjacent the gas distribution module 72. In further contrast to the first level layout 705, the second level layout 710 may omit the one or more power distribution units 64 adjacent the stairway 76.

As illustrated in FIG. 10B, a distance D82A between the pad 82 and a column 79 at an edge of the first floor 710f may be in a range from 7 ft to 11 feet. A width D91 in the y-direction of each of the first connector duct 713-1 and the second connector duct 713-2 may be in a range from 1 ft to 3 ft. A width D92 of each of the first central duct 712-1 and the second central duct 712-2 may also be in a range from 1 ft to 3 ft. A distance D93 in the x-direction from the first central duct 712-1 to the first module unit 701 and from the second central duct 712-2 to the second module unit 702 may be in a range from 2 ft to 4 ft.

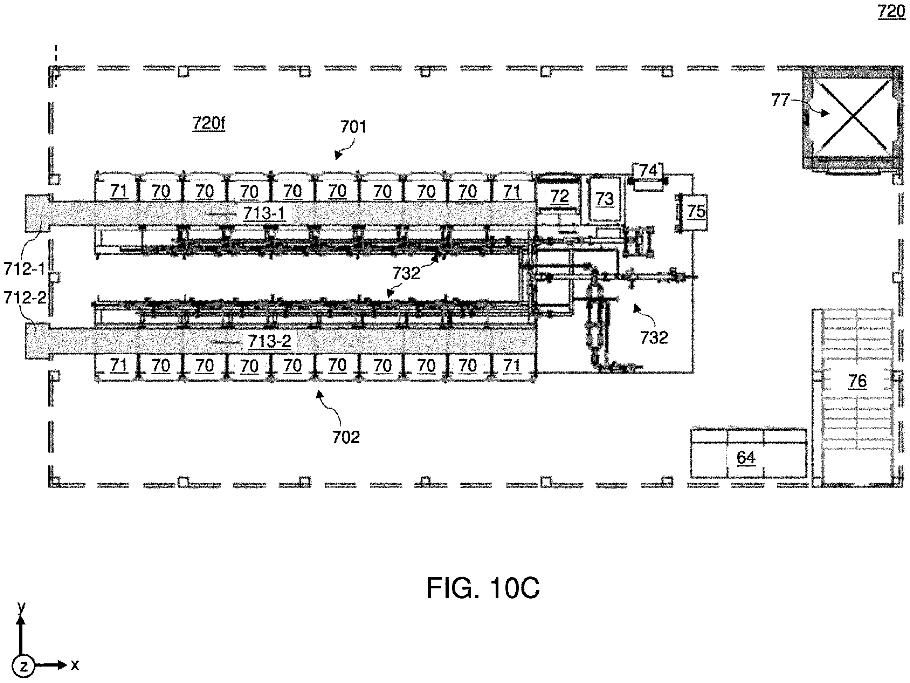

FIG. 10C is a schematic view of a third level layout 720 of the electrolyzer system 700 having the second alternative configuration according to one or more embodiments. As illustrated in FIG. 10C, the third level layout 720 may be substantially similar to the first level layout 705 in FIG. 10A. Thus, the description of the elements and the layout of the elements in the first level layout 705 may also be applied to the third level layout 720.

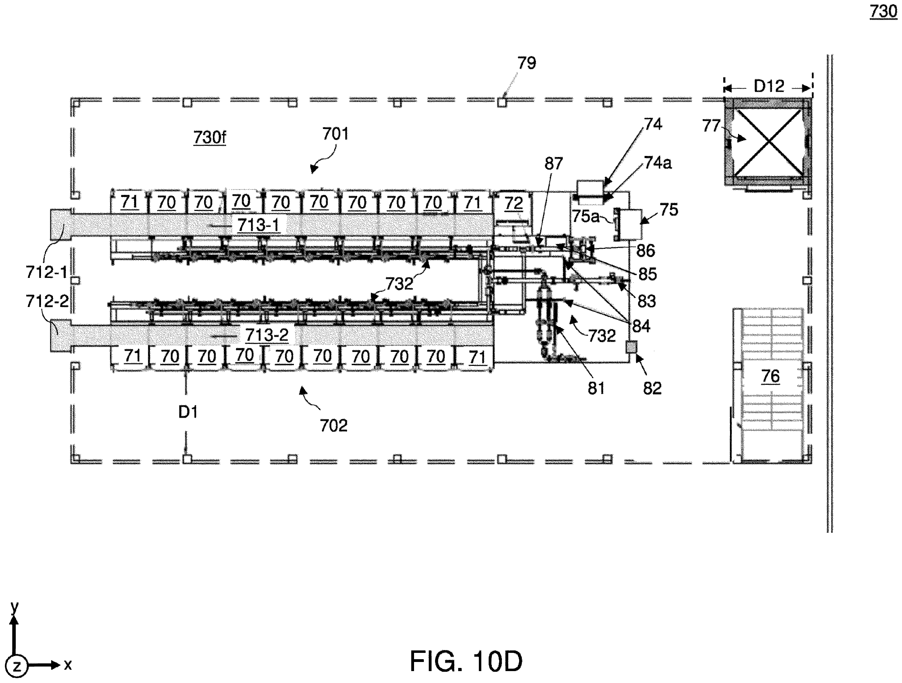

FIG. 10D is a schematic view of a fourth level layout 730 of the electrolyzer system 700 having the second alternative configuration according to one or more embodiments. As illustrated in FIG. 10D, the fourth level layout 720 may be substantially similar to the second level layout 710 in FIG. 10B. Thus, the description of the elements and the layout of the elements in the second level layout 710 may also be applied to the fourth level layout 730.

As illustrated in FIG. 10D, in the fourth level layout 730, the disconnect 74a may be located adjacent the heat trace control panel 74. The panel board 75a may also be located adjacent the UPS 75. The fourth level layout 730 may include the support 81 on the pad 82 for supporting at least a portion of the system components 732. The fourth level layout 730 may also include a hydrogen product line outlet 83, a condensate outlet 84, a communication box 85, a hydrogen vent manifold exhaust 86, and a hydrogen input line 87. It should be noted that one or more of the disconnect 74a, panel board 75a, support 81, hydrogen product line outlet 83, condensate outlet 84, communication box 85, hydrogen vent manifold exhaust 86 and hydrogen input line 87 may also be included in the first level layout 705, second level layout 710 and third level layout 720 in the second alternative configuration of the electrolyzer system 700.

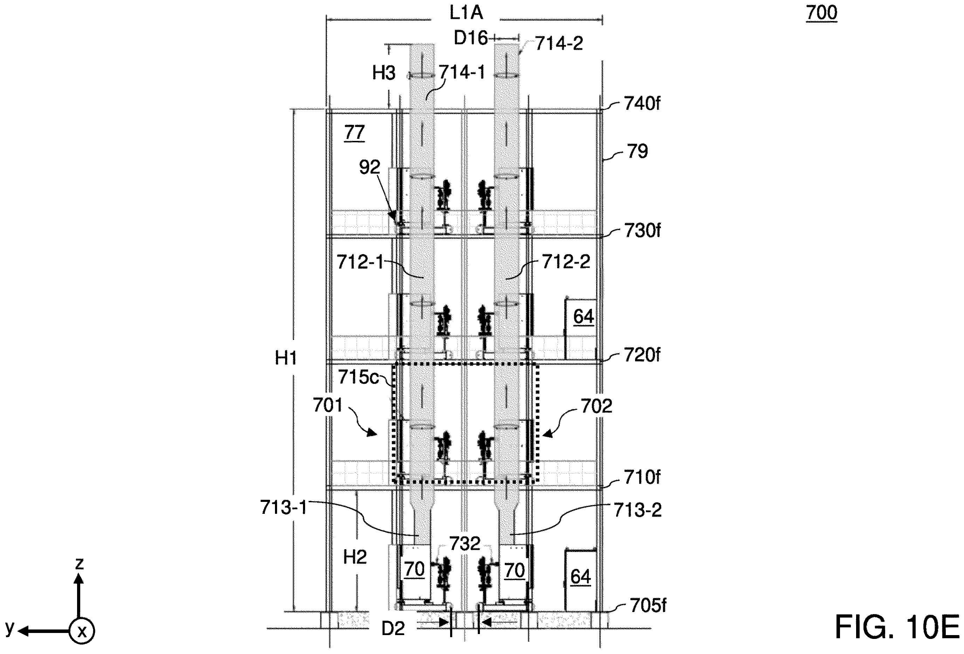

FIG. 10E is a vertical cross-sectional view (e.g., side elevation) of the electrolyzer system 700 (e.g., electrolyzer tower) having the second alternative configuration according to one or more embodiments. As illustrated in FIG. 10E, the electrolyzer system 700 having the second alternative configuration may be substantially similar to the original configuration in FIG. 8E. Thus, the description of the elements and the layout of the elements in the original configuration in FIG. 8E may also be applied to the electrolyzer system have the second alternative configuration.

In particular, the electrolyzer system 700 may include the ground floor 705f, first floor 710f, second floor 720f and third floor 730f. The electrolyzer system 700 may also include a terrace floor 740f (e.g., roof). A distance H1 from the ground floor 705f to the terrace floor 740f (e.g., a height of the electrolyzer tower) may be in a range from 50 ft to 70 ft. A distance H2 between the floors of the electrolyzer tower (e.g., between the ground floor 705f and the first floor 710f, between the first floor 710f and second floor 720f, etc.) may be in a range from 13 ft to 17 ft. The generator modules 70 (and the power modules 71) may be mounted on the skids 92, respectively. The skids 92 may have a length in the y-direction that is greater than a width of the generator modules 70 (and the power modules 71). In at least one embodiment, a portion of the system components 732 may be located on the skids 92.

However, in contrast to the original configuration of FIG. 8E, the second alternative configuration of the electrolyzer system 700 may include the first central duct 712-1 connected to the first module unit 701 and the second central duct 712-2 connected to the second module unit 702. The electrolyzer system 700 may also include the first connector duct 713-1 for connecting the first central duct 712-1 to the generator modules 70 and power modules 71 of the first module unit 701, and the second connector duct 713-2 for connecting the second central duct 712-2 to the generator modules 70 and power modules 71 of the second module unit 702. Each of the first central duct 712-1 and the second central duct 712-2 may extend vertically from a space above the ground floor 705f to the terrace floor 740f.

In the embodiment of FIGS. 10A - 10F, the system components 732 configured to transmit a fluid comprising hydrogen gas (e.g., the hydrogen collection conduits) are located in the same volume as the ventilation assembly comprising the connector ducts 713. For example, as shown in FIG. 10E, the system components 732 on each floor are located below the connector ducts 713 in the same rectangular volume 715c occupied by the connector ducts 713 and the system components 732.

A first exhaust duct 714-1 (e.g., chimney) may be connected to the first central duct 712-1 and extend above the terrace floor 740f. A second exhaust duct 714-2 (e.g., chimney) may be connected to the second central duct 712-2 and extend above the terrace floor 740f. A height H3 of each of the first exhaust duct 714-1 and the second exhaust duct 714-2 may be in a range from 6 ft to 10 ft. The electrolyzer system 700 may have the length L1A in the y-direction. Each of the first exhaust duct 714-1 and the second exhaust duct 714-2 may have a width D16 in the y-direction in a range from 2 ft to 4 ft. As illustrated in FIG. 10E, a width in the y-direction of the first central duct 712-1 may be substantially the same as the width D16 of the first exhaust duct 714-1, and a width in the y-direction of the second central duct 712-2 may be substantially the same as the width D16 of the second exhaust duct 714-2.

As further illustrated in FIG. 10E, the skids 92 on each of the ground floor 705f, first floor 710f, second floor 720f and third floor 730f may be separated by the same distance in the y-direction. In at least one embodiment, the skids 91 may be separated in the y-direction by the distance D2 (see FIG. 10A).

FIG. 10F is another vertical cross-sectional view (e.g., front elevation) of the electrolyzer system 700 (e.g., electrolyzer tower) having the second alternative configuration according to one or more embodiments. In particular, FIG. 10F illustrates a configuration of the second connector duct 713-2 and the second central duct 712-2. It should be noted that the first connector duct 713-1 and the first central duct 712-1 may have the same configuration as the second connector duct 713-2 and the second central duct 712-2, respectively.

As illustrated in FIG. 10F, each the first connector duct 713-1 and the second connector duct 713-2 may include a connector duct horizontal portion 713a and a connector duct vertical portion 713b. In particular, the connector duct vertical portion 713b may connect the connector duct horizontal portion 713a to the generator modules 70 and power modules 71. With respect to the first module unit 701, the connector duct horizontal portion 713a may connect the connector duct vertical portion 713b to the first central duct 712-1. With respect to the second module unit 702, the connector duct horizontal portion 713a may connect the connector duct vertical portion 713b to the second central duct 712-2.

As illustrated in FIG. 10F, the connector duct horizontal portion 713a may have a height D17 in a range from 1 ft to 3 ft. Each of the first exhaust duct 714-2 and the second exhaust duct 714-2 may have a width D22 in the x-direction in a range from 2 ft to 4 ft. As illustrated in FIG. 10F, a width in the x-direction of the first central duct 712-1 may be substantially the same as the width D22 of the first exhaust duct 714-1, and a width in the x-direction of the second central duct 712-2 may be substantially the same as the width D22 of the second exhaust duct 714-2.

The electrolyzer system 700 may also include one or more support beams 745 for supporting the first central duct 712-1 and the second central duct 712-2. At least one of the support beams 745 may be axially aligned with the first central duct 712-1 and at least one of the support beams 745 may be axially aligned with the second central duct 712-2. The support beams 745 may be formed, for example, of concrete or steel. Other suitable materials are within the contemplated scope of disclosure.

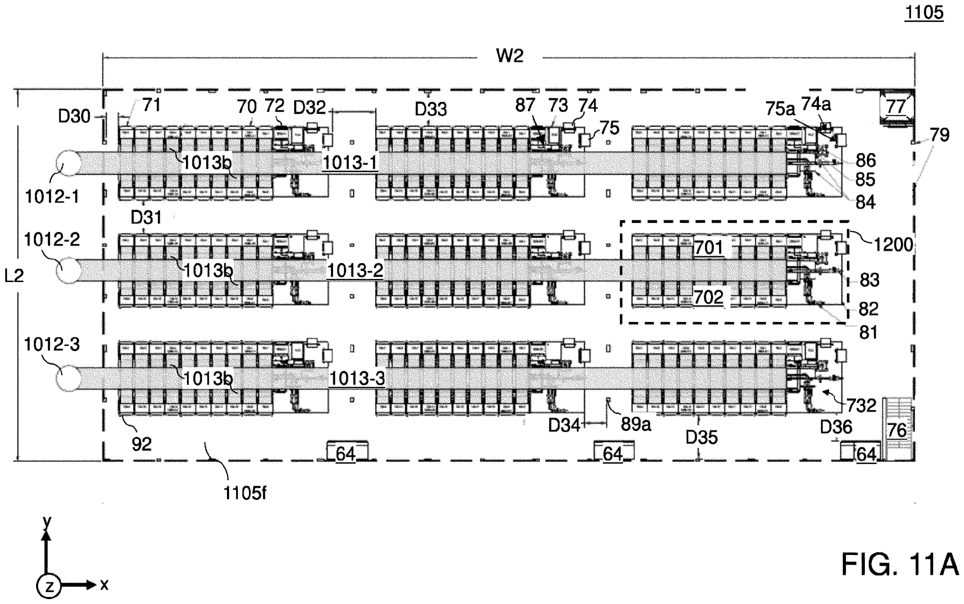

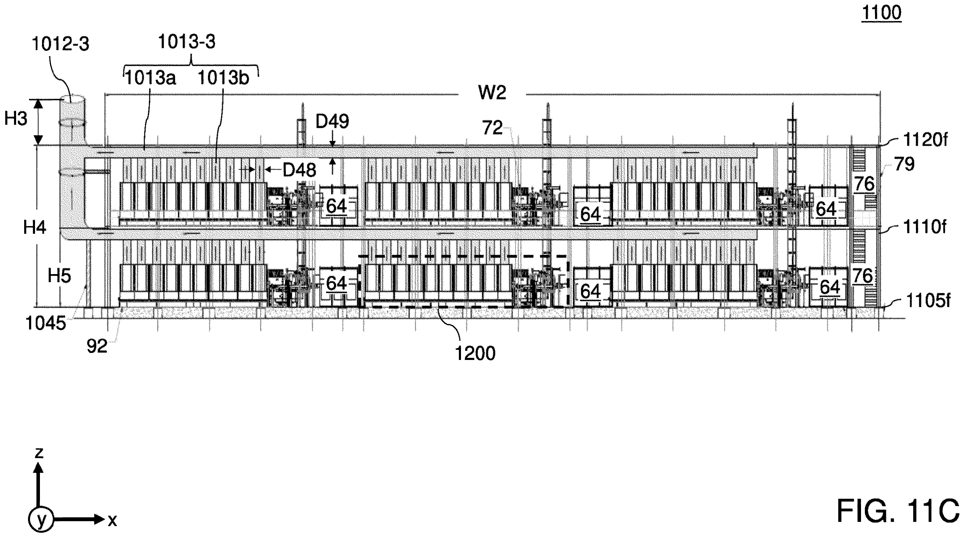

FIGS. 11A-11C are views associated with a large-scale electrochemical system according to one or more embodiments. In one embodiment, the large-scale electrochemical system may include a large-scale electrolyzer system 1100 (FIG. 11C).

In particular, FIG. 11A is a schematic view of a first level layout 1105 (e.g., ground floor) in the large-scale electrolyzer system 1100 according to one or more embodiments. As illustrated in FIG. 11A, the first level layout 1105 may include a plurality of module groups 1200 on a ground floor 1105f. Each of the module groups 1200 may include the first module unit 701 and the second module unit 702.

Each of the module groups 1200 may also include the elements described above with respect to the electrolyzer system 700. The module groups 1200 may include the pad 82 with support 81, the skids 92, the system components 732 (e.g., hydrogen collection conduits), the gas distribution module 72, telemetry control unit 73, the heat trace control panel 74 with disconnect 74a, UPS 75 with panel board 75a, hydrogen product line outlet 83, condensate outlet 84, communication pull box 85, hydrogen vent manifold exhaust 86 and hydrogen input line 87
As illustrated in FIG. 11A, at least one of the module groups 1200 may omit the telemetry control unit 73.

The module groups 1200 may be aligned in the x-direction in rows and in the y-direction in columns. The first level layout 1105 may include a plurality of power distribution units 64. In at least one embodiment, one or more of the power distribution units 64 may distribute power to a column of the module groups 1200. The first level layout 1105 may also include the stairway 76 and the material lift 77 as described above.

The ground floor 1105f may have a length L2 in the y-direction in a range from 70 ft to 100 ft. The ground floor 1105f may have a width W2 in the x-direction in a range from 170 ft to 210 ft. The module groups 1200 may be separated in the x-direction from a column 79 (e.g., support column) at an edge of the ground floor 1105 by a distance D30 in a range from 2 ft to 4 ft. The module groups 120 in a column may be separated in the y-direction by a distance D31 in a range from 6 ft to 10 ft. The module groups 120 in a row may be separated in the x-direction by a distance D32 in a range from 8 ft to 12 ft. The module groups 1200 may be separated in the y-direction from a column 79 at an upper edge of the ground floor 1105 by a distance D33 in a range from 6 ft to 10 ft, and from a column 79 at a lower edge of the ground floor 1105 by a distance D35 in a range from 8 ft to 12 ft. One or more support columns 89 may be formed between the columns of module groups 1200. The module groups 1200 may be separated in the x-direction from the column 89 by a distance D34 in a range from 4 ft to 6 ft. The module group 1200 (e.g., the pad 82) may be separated in the y-direction from the power distribution units 64 by a distance D36 in a range from 5 ft to 9 ft.

The first level layout 1105 may further include connector ducts 1013-1, 1013-2, 1013-3 each including a connector duct horizontal portion 1013a (FIG. 11C) connected to the respective central duct 1012-1, 1012-2, 1012-3, and a connector duct vertical portions 1013b connected to the generator modules 70 of the generator units 701, 702. The connector ducts 1013-1, 1013-2, 1013-3 may be similar to the connector ducts 713-1 and 713-2, except that the horizontal portion 1013a of each of the connector ducts 1013-1, 1013-2, 1013-3 extends horizontally along the x-direction through a row containing plural module groups 1200, and is fluidly connected to the modules 70 by the respective vertical connector ducts 1013b. The horizontal portion 1013a of each of the connector ducts 1013-1, 1013-2, 1013-3 is fluidly connected to the respective vertically extending central duct 1012-1, 1012-2, 1012-3. The vertically extending central ducts 1012-1, 1012-2, 1012-3 are laterally offset from the module groups 1200 along the x-direction and may be located outside the ground floor 1105f in the x-direction.

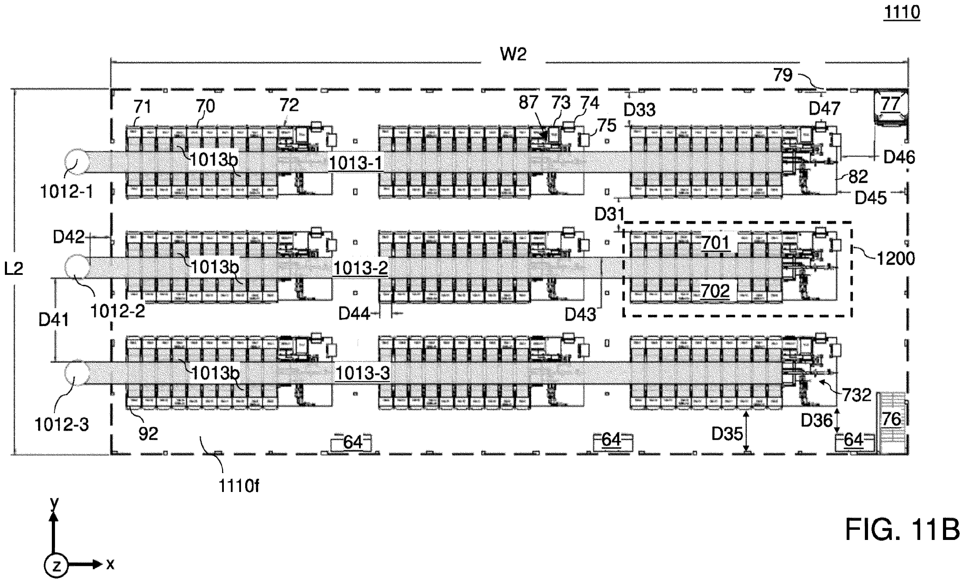

FIG. 11B is a schematic view of a second level layout 1110 (e.g., first floor) in the large-scale electrolyzer system 1100 according to one or more embodiments. As illustrated in FIG. 11B, the second level layout 1110 may have a configuration substantially the same as the configuration of the first level layout 1105. Thus, the description of the elements and the layout of the elements in the first level layout 1105 may also be applied to the second level layout 1110 unless otherwise noted.

In particular, the second level layout 1110 may include a plurality of the module groups 1200 on a first floor 1110f. Each of the module groups 1200 may include the first module unit 701 and the second module unit 702. The module groups 1200 may be aligned in the x-direction in rows and in the y-direction in columns.

The central ducts may be separated in the y-direction by a distance D41 in a range from 17 ft to 23 ft. Each of the central ducts may be separated from an edge of the first floor 11 10f in the x-direction by a distance D42 in a range from 4 ft to 6 ft. A width D43 of the each of the horizontal portion of the connecting duct may be in a range from 4 ft to 6 ft. The skids 92 may have a width D44 in the x-direction in a range from 2 ft to 4 ft. The pad 82 of the module groups 1200 may be separated from an edge of the first floor 11 10f by a distance D45 in a range from 15 ft to 19 ft. The UPS 75 may be separated from the material lift 77 (e.g., a line extending in the y-direction from an inner side of the material lift 77) in the x-direction by a distance D46 in a range from 6 ft to 10 ft. The heat trace control panel 74 may be separated in the y-direction from a column 79 at the edge of the floor 705p by a distance D47 in a range from 5 ft to 9 ft.

FIG. 11C is a vertical cross-sectional view (e.g., front elevation view) of the large-scale electrolyzer system 1100 according to one or more embodiments. As illustrated in FIG. 11C, the large-scale electrolyzer system 1100 may include the ground floor 1105f, first floor 1110f and terrace floor 1120f. The vertical portions 1013b of the connector ducts may extend vertically upward from the generator modules 70 and power modules 71 and connect to the horizontal portions 1013a of the connector ducts. The vertical portions 1013b of the connector ducts may have a width D48 in the x-direction in a range from 1 ft to 3 ft. Each of the horizontal portions 1013a of the connector ducts may have a height D49 in a range from 1 ft to 3 ft.

The large-scale electrolyzer system 1100 may also include one or more support beams 1045 for supporting the central ducts. The support beams 1045 may be formed, for example, of concrete or steel. Other suitable materials are within the contemplated scope of disclosure.

A distance H5 from the ground floor 705f to each of the central ducts may be in a range from 12 ft to 18 ft. A distance H4 from the ground floor 1105f to the terrace floor 1120f (e.g., a height of the electrolyzer tower) may be in a range from 25 ft to 35 ft. The central ducts may extend above the terrace floor 1120f by a distance H3 in a range from 6 ft to 10 ft (e.g., about 8 ft 2 in).

Although only a few examples have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative examples. Other substitutions, modifications, changes, and omissions may also be made in the configuration, operating conditions and arrangement of the various examples without departing from the scope of the present disclosure. Any one or more features of any example may be used in any combination with any one or more other features of one or more other examples. It is intended that the specification and examples be considered as exemplary only, with a true scope being indicated by the following claims and their equivalents.

**The** invention also refers to the following embodiments, wherein the term "claim" means "embodiment":
1. An electrochemical system, comprising:
   a plurality of electrochemical modules;
   a ventilation assembly comprising a central duct connected to the plurality of electrochemical modules and configured to ventilate exhaust gas from the plurality of electrochemical modules; and
   a system component configured to transmit a fluid comprising hydrogen gas, connected to the plurality of electrochemical modules and located inside the central duct.
2. The electrochemical system of claim 1, wherein:
   the central duct comprises an outer duct portion and an inner duct portion located in the outer duct portion; and
   the system component is located in the outer duct portion.
3. The electrochemical system of claim 2, wherein the ventilation assembly further comprises a blower configured to force ambient air into the outer duct portion.
4. The electrochemical system of claim 2, wherein:
   the electrochemical modules comprise fuel cell modules containing fuel cells or electrolyzer modules containing electrolyzer cells;
   the exhaust gas comprises cabinet exhaust gas comprising air; and
   each of the plurality of electrochemical modules comprises:
      a cabinet exhaust gas outlet configured to exhaust the cabinet exhaust gas to the outer duct portion of the central duct; and
      a reaction exhaust gas outlet configured to exhaust a reaction exhaust gas to the inner duct portion of the central duct.
5. The electrochemical system of claim 4, wherein the ventilation assembly further comprises a plurality of connector ducts which extend from the reaction exhaust gas outlet of each of the plurality of electrochemical modules, past the system component to the inner duct portion of the central duct.
6. The electrochemical system of claim 2, wherein:
   the central duct further comprises a first side and a second side opposite to the first side;
   the outer duct portion comprises a first side outer duct portion on the first side of the central duct and a second side outer duct portion on the second side of the central duct; and
   the system component is located in the first side outer duct portion and the second side outer duct portion.
7. The electrochemical system of claim 6, wherein:
   the plurality of electrochemical modules comprises a first module unit of first electrochemical modules located on the first side of the central duct and a second module unit of second electrochemical modules located on the second side of the central duct opposite to the first side;
   the first module unit further comprises a first fuel processing module located adjacent to the first electrochemical modules;
   the second module unit further comprises a second fuel processing module located adjacent to the second electrochemical modules; and
   the system component comprises:
      a first system component located in the first side outer duct portion and connecting the first fuel processing module to the first electrochemical modules in the first module unit; and
      a second system component located in the second side outer duct portion and connecting the second fuel processing module to the second electrochemical modules in the second module unit.
8. The electrochemical system of claim 2, wherein the system component comprises a pipe located in the outer duct portion of the central duct, configured to transport the fluid comprising hydrogen, and connected to the plurality of electrochemical modules.
9. The electrochemical system of claim 8, wherein:
   the pipe is configured to transport hydrogen gas;
   the ventilation assembly further comprises a hydrogen sensor configured to detect a presence of the hydrogen gas in the outer duct portion; and
   the system component further comprises at least one of a valve or a sensor connected to the pipe.
10. The electrochemical system of claim 1, wherein the plurality of electrochemical modules are arranged horizontally and vertically on different floors of a building, the central duct extends vertically through the different floors of the building and includes an outlet in a roof of the building.
11. A method of ventilating an electrochemical system, comprising:
   exhausting a reaction exhaust gas and a cabinet exhaust gas comprising air from a plurality of electrochemical modules in the electrochemical system into a central duct containing system components which transmit a hydrogen containing fluid to or from the plurality of electrochemical modules;
   providing the cabinet exhaust gas in contact with the system components; and
   discharging the reaction exhaust gas and the cabinet exhaust gas out of the central duct.
12. The method of claim 11, wherein the exhausting the reaction exhaust gas and the cabinet exhaust gas comprises:
   exhausting the reaction exhaust gas from the plurality of electrochemical modules through an inner duct portion of the central duct; and
   exhausting the cabinet exhaust gas from the plurality of electrochemical modules through an outer duct portion of the central duct, wherein the system components are located in the outer duct portion.
13. The method of claim 12, wherein the reaction exhaust gas flows from the plurality of electrochemical modules through a plurality of connector ducts extending past the system component to the inner duct portion of the central duct.
14. The method of claim 12, further comprising providing ambient air into the outer duct portion.
15. The method of claim 12, wherein:
   each of the plurality of electrochemical modules comprises:
      a cabinet exhaust gas outlet which exhausts the cabinet exhaust gas to the outer duct portion of the central duct; and
      a reaction exhaust gas outlet which exhausts a reaction exhaust gas to the inner duct portion of the central duct; and
   the ventilation assembly further comprises a plurality of connector ducts which extend from the reaction exhaust gas outlet of each of the plurality of electrochemical modules, past the system component to the inner duct portion of the central duct.
16. The method of claim 12, wherein the system component comprises a pipe which is located in the outer duct portion of the central duct, and which transports the hydrogen containing fluid to or from the plurality of electrochemical modules.
17. The method of claim 16, wherein:
   the electrochemical modules comprise fuel cell modules containing fuel cells; and
   the hydrogen containing fluid comprises hydrogen gas fuel that flows from a fuel processing module through the pipe to the fuel cell modules.
18. The method of claim 16, wherein:
   the electrochemical modules comprise electrolyzer modules containing electrolyzer cells; and
   the hydrogen containing fluid comprises hydrogen gas that is generated from water in the electrolyzer modules and that flows from the electrolyzer modules through the pipe.
19. The method of claim 11, wherein the cabinet exhaust gas dilutes hydrogen leaking from at least one of the system components.
20. The method of claim 11, wherein the plurality of electrochemical modules are arranged horizontally and vertically on different floors of a building, the central duct extends vertically through the different floors of the building and includes an outlet in a roof of the building.
21. An electrochemical system, comprising:
   a plurality of electrochemical modules;
   a ventilation assembly comprising at least one duct connected to the plurality of electrochemical modules and configured to ventilate exhaust gas from the plurality of electrochemical modules; and
   a system component configured to transmit a fluid comprising hydrogen gas, connected to the plurality of electrochemical modules and located in a same volume as the ventilation assembly.
22. The electrochemical system of claim 21, wherein the at least one duct comprises at least one central duct and a plurality of connector ducts which connect the plurality of the electrochemical modules to the central duct.
23. The electrochemical system of claim 22, wherein the system component is located in the same volume as the at least one central duct and the plurality of connector ducts.
24. The electrochemical system of claim 22, wherein the system component is located in the same volume as the plurality of connector ducts.

## Claims

1. An electrochemical system, comprising:
a plurality of electrochemical modules;
a ventilation assembly comprising at least one duct connected to the plurality of electrochemical modules and configured to ventilate exhaust gas from the plurality of electrochemical modules; and
a system component configured to transmit a fluid comprising hydrogen gas, connected to the plurality of electrochemical modules and located in a same volume as the ventilation assembly.

2. The electrochemical system of claim 1, wherein the at least one duct comprises a central duct, and the system component is located inside the central duct.

3. The electrochemical system of claim 2, wherein:
the central duct comprises an outer duct portion and an inner duct portion located in the outer duct portion; and
the system component is located in the outer duct portion.

4. The electrochemical system of claim 3, wherein:
the ventilation assembly further comprises a blower configured to force ambient air into the outer duct portion;
the electrochemical modules comprise fuel cell modules containing fuel cells or electrolyzer modules containing electrolyzer cells;
the exhaust gas comprises cabinet exhaust gas comprising air;
each of the plurality of electrochemical modules comprises:
a cabinet exhaust gas outlet configured to exhaust the cabinet exhaust gas to the outer duct portion of the central duct; and
a reaction exhaust gas outlet configured to exhaust a reaction exhaust gas to the inner duct portion of the central duct; and
the ventilation assembly further comprises a plurality of connector ducts which extend from the reaction exhaust gas outlet of each of the plurality of electrochemical modules, past the system component to the inner duct portion of the central duct.

5. The electrochemical system of claim 3, wherein:
the central duct further comprises a first side and a second side opposite to the first side;
the outer duct portion comprises a first side outer duct portion on the first side of the central duct and a second side outer duct portion on the second side of the central duct; a
the system component is located in the first side outer duct portion and the second side outer duct portion;
the plurality of electrochemical modules comprises a first module unit of first electrochemical modules located on the first side of the central duct and a second module unit of second electrochemical modules located on the second side of the central duct opposite to the first side;
the first module unit further comprises a first fuel processing module located adjacent to the first electrochemical modules;
the second module unit further comprises a second fuel processing module located adjacent to the second electrochemical modules; and
the system component comprises:
a first system component located in the first side outer duct portion and connecting the first fuel processing module to the first electrochemical modules in the first module unit; and
a second system component located in the second side outer duct portion and connecting the second fuel processing module to the second electrochemical modules in the second module unit.

6. The electrochemical system of claim 3, wherein:
the system component comprises a pipe located in the outer duct portion of the central duct, configured to transport the fluid comprising hydrogen, and connected to the plurality of electrochemical modules;
the pipe is configured to transport hydrogen gas;
the ventilation assembly further comprises a hydrogen sensor configured to detect a presence of the hydrogen gas in the outer duct portion; and
the system component further comprises at least one of a valve or a sensor connected to the pipe.

7. The electrochemical system of claim 2, wherein the plurality of electrochemical modules are arranged horizontally and vertically on different floors of a building, the central duct extends vertically through the different floors of the building and includes an outlet in a roof of the building.

8. The electrochemical system of claim 1, wherein:
the at least one duct comprises at least one central duct and a plurality of connector ducts which connect the plurality of the electrochemical modules to the central duct; and
the system component is located in the same volume as the at least one central duct and the plurality of connector ducts, or the system component is located in the same volume as the plurality of connector ducts.

9. A method of ventilating an electrochemical system, comprising:
exhausting a reaction exhaust gas and a cabinet exhaust gas comprising air from a plurality of electrochemical modules in the electrochemical system into a central duct containing system components which transmit a hydrogen containing fluid to or from the plurality of electrochemical modules;
providing the cabinet exhaust gas in contact with the system components; and
discharging the reaction exhaust gas and the cabinet exhaust gas out of the central duct.

10. The method of claim 9, wherein the exhausting the reaction exhaust gas and the cabinet exhaust gas comprises:
exhausting the reaction exhaust gas from the plurality of electrochemical modules through an inner duct portion of the central duct; and
exhausting the cabinet exhaust gas from the plurality of electrochemical modules through an outer duct portion of the central duct, wherein the system components are located in the outer duct portion.

11. The method of claim 9, further comprising providing ambient air into the outer duct portion.

12. The method of claim 9, wherein:
the reaction exhaust gas flows from the plurality of electrochemical modules through a plurality of connector ducts extending past the system component to the inner duct portion of the central duct;
each of the plurality of electrochemical modules comprises:
a cabinet exhaust gas outlet which exhausts the cabinet exhaust gas to the outer duct portion of the central duct; and
a reaction exhaust gas outlet which exhausts a reaction exhaust gas to the inner duct portion of the central duct;
the ventilation assembly further comprises a plurality of connector ducts which extend from the reaction exhaust gas outlet of each of the plurality of electrochemical modules, past the system component to the inner duct portion of the central duct; and
the system component comprises a pipe which is located in the outer duct portion of the central duct, and which transports the hydrogen containing fluid to or from the plurality of electrochemical modules.

13. The method of claim 12, wherein:
the electrochemical modules comprise fuel cell modules containing fuel cells; and
the hydrogen containing fluid comprises hydrogen gas fuel that flows from a fuel processing module through the pipe to the fuel cell modules.

14. The method of claim 12, wherein:
the electrochemical modules comprise electrolyzer modules containing electrolyzer cells; and
the hydrogen containing fluid comprises hydrogen gas that is generated from water in the electrolyzer modules and that flows from the electrolyzer modules through the pipe.

15. The method of claim 11, wherein:
the cabinet exhaust gas dilutes hydrogen leaking from at least one of the system components; and
the plurality of electrochemical modules are arranged horizontally and vertically on different floors of a building, the central duct extends vertically through the different floors of the building and includes an outlet in a roof of the building.
